# EUROPEAN PATENT APPLICATION

(11) **EP 4 776 667 A1**
(43) Date of publication of application: **15.07.2026**
(21) Application number: 24870628.5
(22) Date of filing: 20.09.2024
(51) Int. Cl.: H04W 12/0431, H04W 36/00, H04W 12/041, H04W 12/0433

(54) **KEY MANAGEMENT METHOD AND APPARATUS**

(30) Priority: 28.09.2023 CN 202311288620
(71) Applicant: HUAWEI TECHNOLOGIES CO., LTD., Shenzhen 518129 (CN)
(72) Inventor: GU, Zhifang, Shenzhen, Guangdong 518129 (CN); YOU, Chunhua, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2024/120169
(87) International publication number: WO 2025/067084

(57) **Abstract**

Embodiments of this application disclose a key management method and an apparatus. The method includes: sending preconfiguration information of a plurality of candidate cells and first key information to a terminal device, where the first key information is for deriving a key for communication between the terminal device and an access network device; and sending a first key to a second access network device to which a target cell to which the terminal device switches belongs, where the first key is a key for communication between the terminal device and the second access network device, and the plurality of candidate cells include the target cell. This method can support subsequent switching and implement effective key management.

## Description

This application claims priority to Chinese Patent Application No. 202311288620.5, filed with the China National Intellectual Property Administration on September 28, 2023, and entitled "KEY MANAGEMENT METHOD AND APPARATUS", which is incorporated herein by reference in its entirety.

### TECHNICAL FIELD

Embodiments of this application relate to the field of communication technologies, and in particular, to a key management method and an apparatus.

### BACKGROUND

In a mobile communication system, movement of a terminal device causes a change of a communication link between the terminal device and an access network device. For example, the access network device may indicate, based on a movement status of the terminal device, the terminal device to perform cell switching or access network device switch. When access network device switch occurs, the terminal device usually needs to change a key. To be specific, when communicating with a source access network device and a target access network device, the terminal device performs processing such as encryption and integrity protection on data by using different keys, to achieve secure communication.

Currently, in some handover methods, a plurality of candidate cells may be preconfigured for the terminal device, to support subsequent switching of the terminal device (that is, a plurality of times of switching between the plurality of candidate cells). However, currently, there is no effective key management mechanism for a handover method that supports subsequent switching, which is difficult to ensure communication security.

### SUMMARY

Embodiments of this application disclose a key management method and an apparatus, to support subsequent switching and implement effective key management.

The following describes this application from different aspects. It should be understood that the following implementations and beneficial effects of different aspects may be mutually referenced.

According to a first aspect, this application discloses a key management method. The method may be performed by a first access network device or a module (for example, a chip) in the first access network device. The method may include: sending preconfiguration information of a plurality of candidate cells and first key information to a terminal device, where the first key information is for deriving a key for communication between the terminal device and an access network device; and send a first key to a second access network device to which a target cell to which the terminal device switches belongs, where the first key is a key for communication between the terminal device and the second access network device, and the plurality of candidate cells include the target cell.

In this embodiment of this application, the first access network device may send the preconfiguration information of the plurality of candidate cells to the terminal device, to support the terminal device in performing subsequent switching (that is, one or more times of handover are performed in the plurality of candidate cells). The terminal device does not need to perform a step of obtaining the preconfiguration information for the plurality of times during subsequent cell switching. The first access network device sends, to the terminal device, the first key information for deriving the key in current handover, so that security of the key in the current handover can be ensured. In the method, the first key information and the preconfiguration information are two independent parameters, and the terminal device may use other key information when using the preconfiguration information in subsequent switching after the current handover (that is, after the target cell is accessed), so that the key can be effectively managed, thereby ensuring communication security.

With reference to the first aspect, in a possible implementation, the preconfiguration information of the plurality of candidate cells is used by the terminal device to perform switching one or more times in the plurality of candidate cells.

In this embodiment of this application, the first access network device may send the preconfiguration information of the plurality of candidate cells to the terminal device, to support the terminal device in performing one or more times of handover in the plurality of candidate cells. The terminal device does not need to perform a step of obtaining the preconfiguration information for the plurality of times during subsequent cell switching.

With reference to the first aspect, in a possible implementation, the preconfiguration information does not include the first key information.

In this embodiment of this application, the preconfiguration information does not include the first key information. In this case, the terminal device may re-obtain key information during switching between the plurality of candidate cells to align with a key of an access network device that is to be accessed, and may further use different key information to avoid key repetition in a subsequent switching process. The method provides an effective key management mechanism, thereby ensuring communication security.

For example, the first key information may be a next hop chaining count (next hop chaining count, NCC), and the first key information is for deriving the first key. The first key may be KgNB in new radio NR (new radio) communication. UE and a gNB further derive, by using KgNB, a key Kup used for user plane data and a key Krrc used for radio resource control (Radio Resource Control, RRC) layer signaling. The UE and the gNB perform security processing such as encryption and integrity protection on the user plane data by using Kup, and the UE and the gNB perform security processing such as encryption and integrity protection on RRC signaling by using Krrc. In this embodiment of this application, the terminal device may use a different NCC in each time of subsequent switching. Because KgNB generated based on different NCCs is different, Kup and Krrc derived based on the different KgNB are also different. The method can avoid key reuse in a subsequent switching process, thereby ensuring communication security.

With reference to the first aspect, in a possible implementation, a plurality of candidate cells belong to one or more access network devices.

In this embodiment of this application, the plurality of candidate cells may be managed by one or more access network devices, to support handover of the terminal device between different cells or between different access network devices.

With reference to the first aspect, in a possible implementation, sending the first key to the second access network device to which the target cell to which the terminal device switches belongs includes:
sending the first key to the second access network device after the target cell is determined.

In this embodiment of this application, the target cell to which the terminal device switches may be determined by a serving base station (namely, the first access network device) of the terminal device. After determining the target cell, the first access network device may send, to the second access network device, the first key used for the current handover. It should be understood that, if key exchange is performed in a preconfiguration phase, a strong binding relationship between a key and preconfiguration is caused, and consequently, the key is difficult to change. In addition, because the target cell is not determined in the preconfiguration phase, if a key is sent to a plurality of candidate access network devices in this case, additional data transmission is increased, and consequently, the key is insecure. In the method, the first access network device does not send the first key to the second access network device when obtaining, from the second access network device, the preconfiguration information of a cell managed by the first access network device (referred to as a preconfiguration phase for short), but sends the first key after determining the target cell. This can protect the key, support a key change in a subsequent switching process of the terminal device, and ensure handover security.

With reference to the first aspect, in a possible implementation, the first key information is carried in one of layer 1 signaling, layer 2 signaling, and layer 3 signaling, or the first key information is carried in a handover command, and the handover command indicates switching to the target cell.

With reference to the first aspect, in a possible implementation, before sending the first key to the second access network device to which the target cell to which the terminal device switches belongs, the method further includes: receiving a first message sent by the terminal device, where the first message indicates switching to the target cell.

In this embodiment of this application, the target cell to which the terminal device switches may be determined by the terminal device, and the current handover may be triggered by the terminal device.

With reference to the first aspect, in a possible implementation, sending the first key to the second access network device to which the target cell to which the terminal device switches belongs includes: receiving a request message sent by the second access network device, where the request message is for requesting a key for communication between the terminal device and the second access network device; and sending the first key to the second access network device in response to the request message.

In this embodiment of this application, the first access network device may send the first key to the second access network device in response to the request message sent by the second access network device. In the method, the terminal device does not need to notify the second access network device of the first key after the terminal device determines the target cell by communicating with the first access network device. This can ensure that the terminal device successfully accesses the target cell when a radio link between the terminal device and the first access network device fails.

With reference to the first aspect, in a possible implementation, the request message further includes a message authentication code for integrity, and sending the first key to the second access network device includes: sending the first key to the second access network device after the request message is successfully verified based on the message authentication code for integrity.

In this embodiment of this application, the second access network device may be verified by using the message authentication code for integrity, to ensure security of the first key.

With reference to the first aspect, in a possible implementation, the method further includes: sending a handover request message to the second access network device, where the handover request message is for requesting preconfiguration information of a cell corresponding to the second access network device; and receiving a response message sent by the second access network device, where the response message includes a preconfiguration message of the target cell.

According to a second aspect, this application discloses a key management method. The method may be performed by a terminal device or a module (for example, a chip) in the terminal device. The method may include: receiving preconfiguration information of a plurality of candidate cells and first key information, where the first key information is for deriving a key for communication between a terminal device and an access network device; and after receiving a handover command, performing derivation based on the first key information, to obtain a first key corresponding to a first cell, where the handover command indicates switching to the first cell, the first cell belongs to a second access network device, and the first key is a key for communication between the terminal device and the second access network device.

In this embodiment of this application, the terminal device may receive the preconfiguration information of the plurality of candidate cells, to support the terminal device in performing subsequent switching (that is, one or more times of handover are performed in the plurality of candidate cells) after current handover (that is, handover to the first cell). The terminal device does not need to perform a step of obtaining the preconfiguration information for the plurality of times during subsequent cell switching. In the method, the first key information and the preconfiguration information are two independent parameters, and the terminal device may use other key information when using the preconfiguration information in subsequent switching, so that the key can be effectively managed, thereby ensuring communication security.

With reference to the second aspect, in a possible implementation, the preconfiguration information of the plurality of candidate cells is used by the terminal device to perform switching one or more times in the plurality of candidate cells.

With reference to the second aspect, in a possible implementation, the preconfiguration information does not include the first key information.

With reference to the second aspect, in a possible implementation, the first key information is carried in one of layer 1 signaling, layer 2 signaling, and layer 3 signaling, or the first key information is carried in a handover command.

With reference to the second aspect, in a possible implementation, a plurality of candidate cells belong to one or more access network devices.

With reference to the second aspect, in a possible implementation, the method further includes:
when determining that handover to the first cell fails or a radio link fails, determining a second cell from the plurality of candidate cells, where the second cell belongs to a third access network device; and
sending a second message to the third access network device, where the second message is for requesting to access the second cell.

In this embodiment of this application, when determining that handover fails or a radio link fails, the terminal device may determine the second cell from the plurality of candidate cells, and initiate access to the third access network device corresponding to the second cell. The method can ensure that the terminal device successfully accesses another cell when the handover fails or the radio link fails.

With reference to the second aspect, in a possible implementation, the second message further includes a message authentication code for integrity and/or an identifier of the terminal device.

According to a third aspect, this application discloses a key management method. The method may be performed by a terminal device or a module (for example, a chip) in the terminal device. The method may include: receiving preconfiguration information of a plurality of candidate cells and first key information; sending a first message to a first access network device, where the first message indicates switching to a first cell, the first cell belongs to a second access network device, and the plurality of candidate cells include the first cell; performing derivation based on the first key information, to obtain a first key corresponding to the first cell, where the first key is a key for communication between a terminal device and the second access network device; receiving second key information from the second access network device; sending a second message to the second access network device, where the second message indicates switching to a second cell, the second cell belongs to a third access network device, and the plurality of candidate cells include the second cell; and performing derivation based on the second key information, to obtain a second key corresponding to the second cell, where the second key is a key for communication between the terminal device and the third access network device.

In this embodiment of this application, the terminal device re-obtains key information each time when the terminal device switches between cells, to derive different keys. For example, the terminal device derives, by using the first key information, the first key corresponding to the first cell, and derives, by using the second key information, the second key corresponding to the second cell. The method can avoid a case in which a key is repeated when the terminal device switches between a plurality of candidate cells for a plurality of times, thereby ensuring key security.

With reference to the third aspect, in a possible implementation, the method further includes: determining the first cell and/or the second cell from the plurality of candidate cells based on the preconfiguration information of the plurality of candidate cells.

With reference to the third aspect, in a possible implementation, a plurality of candidate cells belong to one or more access network devices.

With reference to the third aspect, in a possible implementation, the first key information and/or the second key information is carried in one of layer 1 signaling, layer 2 signaling, and layer 3 signaling.

With reference to the third aspect, in a possible implementation, the method further includes: when determining that handover to the second cell fails or a radio link fails, determining a third cell from the plurality of candidate cells, where the third cell belongs to a fourth access network device; and sending a third message to the fourth access network device, where the third message is for requesting to access the third cell.

With reference to the third aspect, in a possible implementation, the third message further includes a message authentication code for integrity and/or an identifier of the terminal device.

According to a fourth aspect, this application provides a communication apparatus. The communication apparatus may be a first device or a chip/circuit in the first device. The communication apparatus is configured to perform the method according to any one of the first aspect or the possible implementations of the first aspect. The communication apparatus includes units for performing the method according to any one of the first aspect or the possible implementations of the first aspect.

According to a fifth aspect, this application provides a communication apparatus. The communication apparatus may be a second device or a chip/circuit in the second device. The communication apparatus is configured to perform the method according to any one of the second aspect, the third aspect, or the possible implementations of the second aspect or the third aspect. The communication apparatus includes units for performing the method according to any one of the second aspect, the third aspect, or the possible implementations of the second aspect or the third aspect.

In the fourth aspect or the fifth aspect, the communication apparatus may include a transceiver unit and a processing unit. For detailed descriptions of the transceiver unit and the processing unit, refer to apparatus embodiments provided below. For beneficial effects of the fourth aspect or the fifth aspect, refer to related descriptions of the first aspect to the third aspect. Details are not described herein again.

According to a sixth aspect, this application discloses a key management method. The method may be performed by a first access network device or a module (for example, a chip) in the first access network device. The method may include: performing derivation based on an initial key of the first access network device, to obtain a first key corresponding to the first access network device, where the first key is a key for communication between a terminal device and the first access network device; sending first key information to the terminal device, where the first key information is for deriving a second key for communication between the terminal device and a second access network device; and performing derivation based on the second key information of the first access network device, to obtain a third key corresponding to the first access network device, where the third key is a key for communication between the terminal device and the first access network device, and the first key is different from the second key.

In this embodiment of this application, the first access network device may derive the key for communication with the terminal device, and derive different keys by using different key information after each time of access of the terminal device. This method can avoid key reuse, thereby ensuring communication security.

With reference to the sixth aspect, in a possible implementation, the terminal device stores preconfiguration information of a plurality of candidate cells. The method can support subsequent switching of the terminal device. For example, the terminal device may store preconfiguration information of cells managed by the first access network device and the second access network device.

With reference to the sixth aspect, in a possible implementation, the first access network device may derive the first key or the third key after receiving an access request of the terminal device.

With reference to the sixth aspect, in a possible implementation, the method further includes: sending a path switch request to a core network; and receiving a response message from the core network, where the response message includes the first key information and the second key information, the first key information and the second key information correspond to the first access network device, the first key information is for deriving a key when the terminal device accesses the first access network device, and the second key information is used by the first access network device to derive a key.

According to a seventh aspect, this application discloses a key management method. The method may include: performing derivation based on an initial key of a first access network device, to obtain a first key corresponding to the first access network device, where the first key is a key for communication between a terminal device and the first access network device; receiving first key information sent by the first access network device, where the first key information is for deriving a second key for communication between the terminal device and a second access network device; and performing derivation based on second key information, to obtain a third key corresponding to the first access network device, where the third key is a key for communication between the terminal device and the first access network device, and the first key is different from the second key.

In this embodiment of this application, the first access network device may derive the key for communication with the terminal device, and derive different keys by using different key information after each time of access of the terminal device. This method can avoid key reuse, thereby ensuring communication security.

With reference to the seventh aspect, in a possible implementation, the terminal device stores preconfiguration information of a plurality of candidate cells. The method can support subsequent switching of the terminal device. For example, the terminal device may store preconfiguration information of cells managed by the first access network device and the second access network device.

With reference to the seventh aspect, in a possible implementation, the terminal device may obtain, from a source cell, preconfiguration information of cells managed by the first access network device and the second access network device; and derive the first key when receiving a handover command sent by the source cell or determining a target cell for handover. The handover command indicates switching to a cell managed by the first access network device, and the target cell is the cell managed by the first access network device.

According to an eighth aspect, this application provides a communication apparatus. The communication apparatus may be a sixth device or a chip/circuit in the sixth device. The communication apparatus is configured to perform the method according to any one of the sixth aspect or the possible implementations of the sixth aspect. The communication apparatus includes units for performing the method according to any one of the sixth aspect or the possible implementations of the sixth aspect.

According to a ninth aspect, this application provides a communication apparatus. The communication apparatus may be a seventh device or a chip/circuit in the seventh device. The communication apparatus is configured to perform the method according to any one of the seventh aspect or the possible implementations of the seventh aspect. The communication apparatus includes units for performing the method according to any one of the seventh aspect or the possible implementations of the seventh aspect.

In the eighth aspect or the ninth aspect, the communication apparatus may include a transceiver unit and a processing unit. For detailed descriptions of the transceiver unit and the processing unit, refer to apparatus embodiments provided below. For beneficial effects of the eighth aspect and the ninth aspect, refer to related descriptions of the sixth aspect and the seventh aspect. Details are not described herein again.

According to a tenth aspect, this application provides a communication apparatus. The communication apparatus may include a processor and an interface circuit. The processor is connected to the interface circuit. The interface circuit is configured to exchange (or transmit/receive, or input/output) information or data, and the processor is configured to run program instructions, so that the communication apparatus performs the method according to any one of the first aspect, the second aspect, the third aspect, the sixth aspect, or the seventh aspect, or the possible implementations of the aspects. The interface circuit may be a communication interface or a transceiver. The transceiver may be a radio frequency module in the communication apparatus, a combination of a radio frequency module and an antenna, or an input/output interface of a chip or a circuit.

According to an eleventh aspect, this application provides a readable storage medium. The readable storage medium stores program instructions; and when the program instructions are run on a computer, the computer is enabled to perform the method according to any one of the first aspect, the second aspect, the third aspect, the sixth aspect, or the seventh aspect, or the possible implementations of the aspects.

According to a twelfth aspect, this application provides a program product including program instructions. When the program instructions are run, the method according to any one of the first aspect, the second aspect, the third aspect, the sixth aspect, or the seventh aspect, or the possible implementations of the aspects is performed.

According to a thirteenth aspect, this application provides an apparatus. The apparatus may be implemented in a form of a chip, or may be in a form of a device. The apparatus includes a processor. The processor is configured to read and execute a program stored in a memory, to perform the information exchange method according to any one of the first aspect, the second aspect, the third aspect, the sixth aspect, or the seventh aspect, or the possible implementations of the aspects. Optionally, the apparatus further includes the memory, and the memory is connected to the processor by using a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a fourteenth aspect, this application provides a communication system. The communication system includes a first access network device and a terminal device. The first access network device is configured to perform the method according to any one of the first aspect or the sixth aspect, or the possible implementations of the aspects, and the terminal device is configured to perform the method according to any one of the second aspect, the third aspect, or the seventh aspect, or the possible implementations of the aspects.

For technical effects achieved in the foregoing aspects, refer to each other, or refer to beneficial effects in the following method embodiments. Details are not described herein.

### BRIEF DESCRIPTION OF DRAWINGS

FIG. 1A is a diagram of a handover scenario according to an embodiment of this application;
FIG. 1B is a schematic flowchart of a handover method according to an embodiment of this application;
FIG. 2 is a schematic flowchart of a handover method according to an embodiment of this application;
FIG. 3 is a diagram of a network architecture of a communication system according to an embodiment of this application;
FIG. 4 is a schematic flowchart of a key management method according to an embodiment of this application;
FIG. 5 is a schematic flowchart of another key management method according to an embodiment of this application;
FIG. 6A and FIG. 6B are a schematic flowchart of still another key management method according to an embodiment of this application;
FIG. 7 is a schematic flowchart of still another key management method according to an embodiment of this application;
FIG. 8A and FIG. 8B are a schematic flowchart of yet another key management method according to an embodiment of this application;
FIG. 9 is a diagram of a structure of a communication apparatus according to an embodiment of this application;
FIG. 10 is another diagram of a structure of a communication apparatus according to an embodiment of this application; and
FIG. 11 is still another diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit quantities and execution sequences. In addition, the words such as "first" and "second" do not indicate a definite difference. For example, first information and second information, a first PDC type and a second PDC type, and the like are merely for distinguishing different information, and a sequence thereof is not limited. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, terms such as "example" or "for example" are used to give an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective case, are not intended to limit time, and do not require a determining action during implementation of the apparatus, or do not mean that there is another limitation. That the apparatus performs corresponding processing in the objective case includes: The corresponding processing can be performed when the objective case is satisfied; or the corresponding processing can be performed only when the objective case and other cases are satisfied.

"Simultaneously" in this application may be understood as being at a same time point, may be understood as being in a period of time, or may be understood as being in a same periodicity, and may be specifically understood with reference to a context.

In this application, unless otherwise specified, an element indicated in a singular form is intended to indicate "one or more", but does not indicate "one and only one".

In addition, the terms "system" and "network" may be used interchangeably in this specification.

It may be understood that in embodiments of this application, "A corresponds to B", "B corresponds to A", "B corresponding to A", or a similar expression thereof indicates that B is associated with A, and B may be determined based on A. Determining B based on A does not mean that B is determined based only on A, and B may alternatively be determined based on A and/or other information.

Currently, handover technologies such as layer 3 handover (L3 Handover) and conditional handover (Conditional Handover) are only for a handover process of handover to a cell once. To be specific, a process such as a handover request and a handover request response between a source base station and a target base station needs to be performed once each time handover to a cell is performed. For ease of description, the foregoing handover technology is referred to as a one-time handover technology in embodiments of this application.

The following uses L3 handover as an example to describe the one-time handover technology.

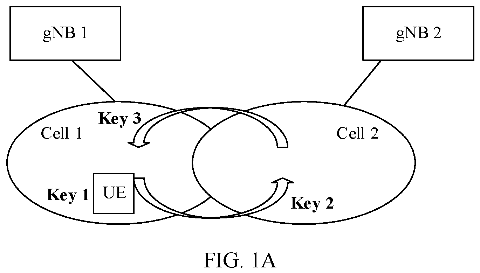

FIG. 1A is a diagram of an example of a handover scenario according to an embodiment of this application.

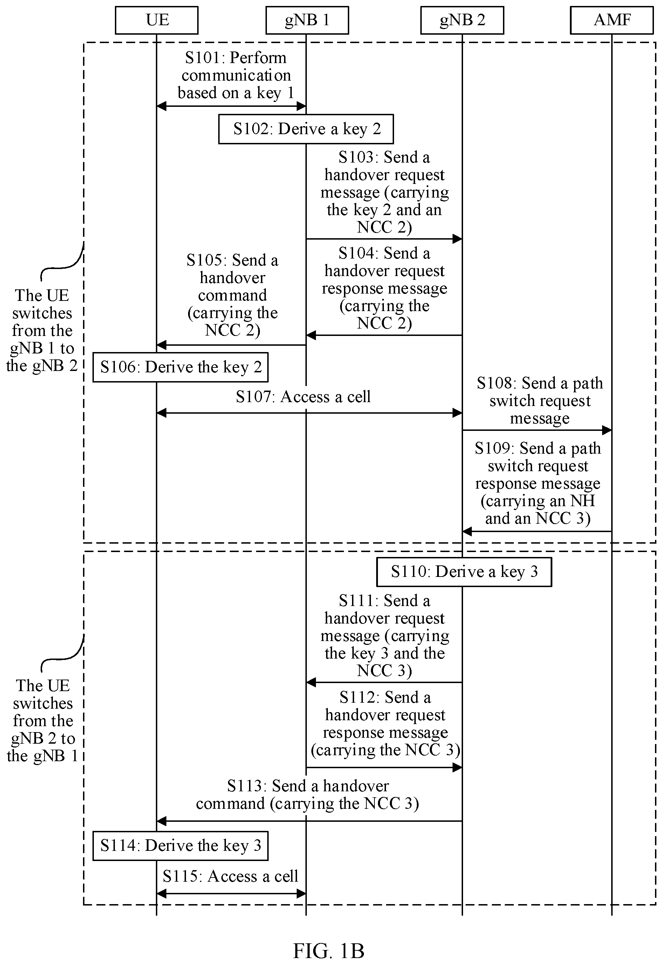

As shown in FIG. 1A, a serving cell of user equipment (user equipment, UE) at an initial moment is a cell 1 (a serving access network device is a gNB 1), and UE performs encrypted communication with the serving cell/the serving access network device by using a key 1. As the UE moves, the UE switches to a cell 2/a gNB 2, and the UE communicates with the cell 2/the gNB 2 by using a key 2. Because L3 handover is a one-off handover, the handover process is considered to be completed. Then, the UE continues to move to the cell 1/the gNB 1 and needs to perform the foregoing procedure again. The UE uses a key 3 to perform encrypted communication with the cell 1 or the gNB 1. For a specific procedure of the foregoing two times of handover, refer to FIG. 1B. The keys, namely, the key 1, the key 2, and the key 3, may be KgNB in new radio NR (new radio) communication. UE and a gNB further derive, by using KgNB, a key Kup used for user plane data and a key Krrc used for radio resource control (Radio Resource Control, RRC) layer signaling. The UE and the gNB perform security processing such as encryption and integrity protection on the user plane data by using Kup, and the UE and the gNB perform security processing such as encryption and integrity protection on RRC signaling by using Krrc.

FIG. 1B is a schematic flowchart of an example of a handover method according to this application. The method may include a part or all of the following steps.

S101: UE communicates with a gNB 1 based on a key 1.

It should be understood that a serving cell of the UE in current handover is the cell 1, and is managed by the gNB 1. Therefore, the gNB 1 is also referred to as a serving gNB. The UE may use the key 1 to perform processing such as encryption and integrity protection on communication data and signaling. Optionally, when performing encryption processing on data and signaling, the UE may further use the key 1 as a parameter to generate a user plane processing key Kup and an RRC layer processing key Krrc. For user plane data, security processing such as encryption and integrity protection is performed by using Kup. For RRC signaling, security processing such as encryption and integrity protection is performed by using Krrc. Similarly, for the gNB 1, the key 1 may also be used as a parameter to further generate a user plane processing key Kup and a radio resource control layer processing key Krrc. For user plane data, security processing such as encryption and integrity protection is performed by using Kup. For RRC signaling, security processing such as encryption and integrity protection is performed by using Krrc.

S102: The gNB 1 derives a key 2 of a target cell/a target gNB.

In the current handover, the gNB 1 may be referred to as a source gNB, the cell 1 may be referred to as a source cell, a gNB 2 may be referred to as the target gNB, and the cell 2 may be referred to as the target cell.

S103: The gNB 1 sends a handover request message to the gNB 2, where the handover request message includes the key 2 and an NCC 2.

The NCC 2 is a next hop chaining count (next hop chaining count, NCC) provided by an access and mobility management function (access and mobility management function, AMF) for the gNB 1, and is used by the UE to derive the key 2. The key 2 is a key used by the UE to communicate with the cell 2 or the gNB 2.

S104: The gNB 2 sends a handover request response message to the gNB 1, where the message includes configuration information of the target cell (namely, the cell 2) and the NCC 2.

S105: The gNB 1 sends a handover command to the UE, where the handover command includes the configuration information of the target cell (namely, the cell 2) and the NCC 2.

S106: The UE performs handover based on the handover command, and performs key derivation by using the NCC 2, to obtain the key 2.

It should be understood that, when performing encryption processing on data and signaling, the UE may further use the key 2 as a parameter to generate a user plane processing key Kup and an RRC layer processing key Krrc.

S107: The UE accesses the cell 2/the gNB 2.

S108: The gNB 2 sends a path switch request message to the AMF, to request a core network to switch a downlink path, for the UE, between a user plane function network element and a base station from the gNB 1 to the gNB 2.

S109: The AMF sends a path switch request response message to the gNB 2, to respond to a case in which whether the path is successfully switched.

Further, the response message includes an NH and an NCC 3. The NH is a next hop parameter (Next Hop parameter), and is used by the gNB 2 to derive the key 3 during next switching. The NCC 3 is used by the UE to derive the key 3 during the next switching.

In S101 to S109, the UE completes a handover process (referred to as a first time of handover) from the cell 1/the gNB 1 to the cell 2/the gNB 2. For subsequent switching, the UE, the source cell/the source gNB, and the target cell/the target gNB need to perform a procedure the same as that of the first time of handover. The next switching is used as an example for description. For example, if the next switching is handover from the cell 2/the gNB 2 to the cell 1/the gNB 1, the cell 2/the gNB 2 is referred to as a source cell/a source gNB, and the cell 1/the gNB 1 is referred to as a target cell/a target gNB. For a specific process of the next switching, refer to the following S110 to S117.

S110: The gNB 2 derives the key 3.

A derivation process of step S110 is similar to that of step S102. Specifically, the gNB 2 derives the key 3 based on information such as the NH obtained in S109 and a cell identity of the cell 1.

S111: The gNB 1 sends a handover request message to the gNB 2, where the handover request message includes the key 3 and the NCC 3.

A specific implementation of step S111 is similar to that of S103.

S112: The gNB 2 sends a handover request response message to the gNB 1, where the message includes configuration information of the target cell (namely, the cell 1) and the NCC 3.

A specific implementation of step S112 is similar to that of S104.

S113: The gNB 1 sends a handover command to the UE, where the handover command includes configuration information of the target cell, namely, the cell 1, and the NCC 3.

A specific implementation of step S113 is similar to that of S105.

S114: The UE performs handover based on the handover command, and performs key derivation by using the NCC 3, to obtain the key 3.

A specific implementation of step S114 is similar to that of S106.

S115: The UE accesses the cell 1/the gNB 1.

A specific implementation of step S115 is similar to that of S107.

Steps S116 and S117 are similar to steps S108 and S109, which are not shown in FIG. 1B.

In S110 to S117, the UE completes a handover process from the cell 2/the gNB 2 to the cell 1/the gNB 1.

It can be learned that, in the foregoing one-time handover technology, for the next switching, a handover preparation process (for example, the handover request and the handover request response in step S103 and step S104 in FIG. 1B) needs to be performed again, and keys used by the UE and the target cell are aligned by using the handover preparation process and the handover command. The foregoing method does not support subsequent switching of the terminal device.

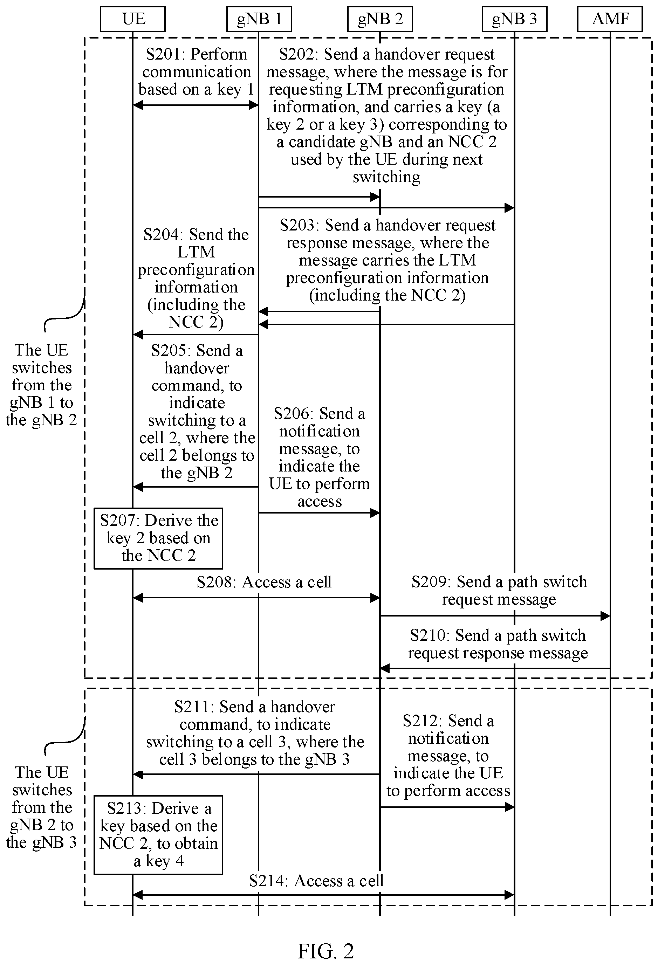

The following describes, by using FIG. 2 as an example, a handover method that supports subsequent switching. Supporting the subsequent switching means preconfiguring a plurality of candidate cells for a terminal device, to support the terminal device in performing switching between the plurality of candidate cells for a plurality of times.

Refer to FIG. 2. FIG. 2 is a schematic flowchart of an example of a handover method according to this application. The method may include a part or all of the following steps.

S201: UE communicates with a gNB 1 based on a key 1.

For example, a source cell is a cell 1, and a source gNB is a gNB 1.

S202: The gNB 1 sends a handover request message to a candidate gNB, where the handover request message is for requesting L1/L2 triggered mobility (L1/L2 Triggered Mobility, LTM) preconfiguration information of a candidate cell, and the handover request message includes a key (for example, a key 2 corresponding to a gNB 2 or a key 3 corresponding to a gNB 3) corresponding to the candidate gNB and an NCC (namely, an NCC 2) used by the UE during next switching.

For example, FIG. 2 shows that the candidate gNB includes the gNB 2 and the gNB 3. The gNB 1 may send a handover request message to the gNB 2, where the message includes the key 2 and the NCC 2. The gNB 1 may send a handover request message to the gNB 3, where the message includes the key 3 and the NCC 2.

It should be understood that the gNB 1 obtains only one {NH, NCC} pair from a core network. Therefore, NCCs provided by the gNB 1 for the gNB 2 and the gNB 3 are the same, namely, the NCC 2. The NCC 2 is key information used by the UE for the next switching, and the NCC 2 corresponds to an NH 2.

S203: The candidate gNB sends a handover request response message to the gNB 1, where the handover request response message is for providing the preconfiguration information of the candidate cell, and the handover request response message includes the NCC 2 used by the UE for the next switching.

S204: The gNB 1 sends the preconfiguration information of the candidate cell to the UE, where the preconfiguration information includes the NCC 2.

S205: The gNB 1 sends a handover command to the UE, where the handover command indicates switching to a cell 2, and the cell 2 is managed by the gNB 2.

The current handover is described by using an example in which a target cell is the cell 2 and a target base station is the gNB 2.

The handover command includes identification information corresponding to the cell 2.

S206: The gNB 1 sends a notification message to the gNB 2, where the notification message indicates the UE to perform access.

S207: The UE derives the key 2 of the cell 2 based on the NCC 2.

S208: The UE accesses the cell 2.

S209: The gNB 2 sends a path switch request message to the AMF, to request the core network to switch a downlink path, for the UE, between a user plane function network element and a base station from the gNB 1 to the gNB 2.

S210: The AMF sends a path switch request response message to the gNB 2, to respond to a case in which whether the path is successfully switched.

In S201 to S210, the UE completes a handover process (referred to as a first time of handover) from the cell 1/the gNB 1 to the cell 2/the gNB 2. For subsequent switching, the UE, the source cell/the source gNB, and the target cell/the target gNB do not need to perform a procedure the same as that of the first time of handover. The next switching is used as an example for description. For example, if the next switching (referred to as a second time of handover for short) is handover from the cell 2/the gNB 2 to a cell 3/a gNB 3, the cell 2/the gNB 2 is referred to as a source cell/a source gNB, and the cell 3/the gNB 3 is referred to as a target cell/a target gNB. For a specific process, refer to the following S211 to S214.

S211: The gNB 2 sends a handover command to the UE, where the handover command indicates switching to the cell 3, and the cell 3 is managed by the gNB 3.

S212: The gNB 2 sends a notification message to the target gNB (namely, the gNB 3), where the notification message indicates the UE to perform access.

S213: The UE derives a key of the target cell based on the NCC 2, to obtain a key 4.

S214: The UE accesses the target cell (namely, the cell 3).

The key 3 obtained by the gNB 3 in step S202 is derived by the gNB 1 based on the key 1. However, in step S213, the key 4 is derived by the UE based on the key 1 and the NCC 2, and the key 3 is different from the key 4 (that is, keys for the second time of handover are not aligned). It can be learned that in the method shown in FIG. 2, key misalignment occurs during subsequent switching to another candidate gNB. In addition, it is assumed that after the UE successfully switches to another cell, the UE switches back to the cell 1. Because the gNB 1 still uses the key 1, key reuse occurs.

It can be learned that there is no effective key management mechanism for a handover method that supports subsequent switching, which is difficult to ensure communication security.

In view of this, embodiments of this application provide a key management method and a related apparatus. In the method, UE re-obtains key information during each time of handover, to ensure that a key used in each time of handover is different. This can ensure key alignment between a terminal device and a target access network device and that a key is not reused in subsequent switching. This provides an effective key management mechanism, thereby ensuring communication security.

Based on the foregoing descriptions, to better understand the key management method and the related apparatus provided in this application, the following first describes a network architecture to which embodiments of this application are applied.

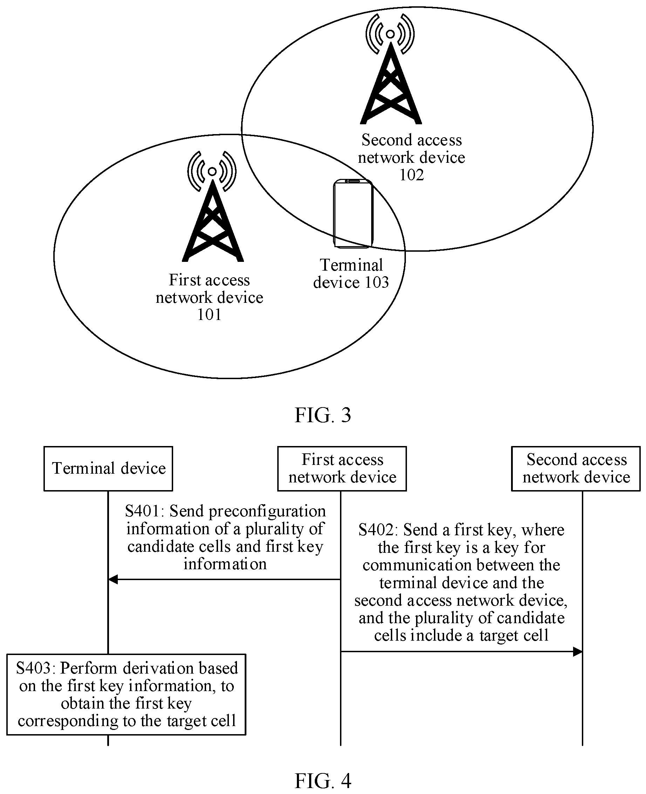

Refer to FIG. 3. FIG. 3 is a diagram of a network architecture of a communication system according to an embodiment of this application.

As shown in FIG. 3, the network architecture may include a first access network device 101, a second access network device 102, and a terminal device 103. It should be understood that FIG. 3 shows only two access network devices as an example. The network architecture may further include another access network device. A quantity of access network devices is not limited in embodiments of this application.

The terminal device 103 may be switched in a cell of the first access network device 101 or the second access network device 102 based on the key management method provided in embodiments of this application.

The terminal device 103 may be connected to the first access network device 101 or the second access network device 102 in a wireless manner, and may access a core network via the first access network device 101 or the second access network device 102. The terminal device 103 may be at a fixed location, or may be movable.

The first access network device 101 and the second access network device 102 may be entities configured to transmit or receive signals, or may be devices configured to communicate with the terminal device 103. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects the terminal device 103 to the wireless network. Currently, some examples of the RAN node are a base station, a next-generation NodeB gNB, a transmission reception point (transmission reception point, TRP), an evolved NodeB (evolved NodeB, eNB), a home base station, a baseband unit (baseband unit, BBU), and an access point (access point, AP) in a Wi-Fi system. In a network structure, the network device may include a central unit (central unit, CU) node, or a distributed unit (distributed unit, DU) node, or a RAN device including a CU node and a DU node. In an O-RAN system, the CU may also be referred to as an O-CU, and the DU may also be referred to as an O-DU.

The terminal device 103 is an entity on a user side and configured to receive or transmit a signal, and is mainly configured to implement a function of performing wireless communication with the first access network device 101.

For example, the terminal device 103 may be an access terminal, a subscriber unit, a subscriber station, a mobile station, a remote station, a remote terminal, a mobile device, a user terminal, a terminal, a wireless communication device, a user agent, a user apparatus, or the like. Alternatively, the terminal device 103 may be a mobile phone (mobile phone), a cellular phone, a cordless phone, a session initiation protocol (session initiation protocol, SIP) phone, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a computing device or another processing device connected to a wireless modem, a vehicle-mounted device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device (for example, a smart watch, a smart band, and a pedometer), a terminal device in the 5G network, a terminal device in a future evolved public land mobile network (public land mobile network, PLMN), or the like. This is not limited in embodiments of this application. The terminal device 103 may be a device deployed on land, including an indoor device, an outdoor device, a handheld device, a wearable device, or a vehicle-mounted device; may be a device deployed on water (for example, on a ship); or may be a device deployed in air (for example, on an airplane, a balloon, and a satellite). In embodiments of this application, the terminal device 103 may be legacy UE, may be RB-level partial frequency hopping (RB-level partial frequency hopping, RPFS) UE that supports SRS coverage and capacity enhancement, or may be another UE. A type of the terminal device 103 is not limited in this application. The legacy UE refers to user equipment that supports an existing mechanism, for example, user equipment that supports release 15 and release 16.

In embodiments of this application, any one of the first access network device 101, the second access network device 102, and the terminal device 103 may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be executed by any one of the first access network device 101, the second access network device 102, and the terminal device 103, or a functional module that can invoke a program and execute the program in any one of the first access network device 101, the second access network device 102, and the terminal device 103.

It should be noted that a quantity of terminal devices 103 included in the network architecture shown in FIG. 3 and types of the terminal devices are merely examples. Embodiments of this application are not limited thereto. For example, more or fewer terminal devices 103 that communicate with the access network device may be further included. For brevity, details are not described in the accompanying drawings.

In addition, in the network architecture shown in FIG. 3, although any one of the first access network device 101, the second access network device 102, and the terminal device 103 is shown, the application scenario may not be limited to including any one of the first access network device 101, the second access network device 102, and the terminal device 103. For example, the application scenario may further include a core network device or a device configured to provide a virtualized network function. The core network device communicates with the terminal device 103 via the first access network device 101.

Technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system. This is not limited herein.

With reference to the foregoing network architecture, the following describes the key management method provided in embodiments of this application.

Refer to FIG. 4. FIG. 4 is a schematic flowchart of a key management method according to an embodiment of this application. In this embodiment, a function performed by a terminal device may also be performed by a module (for example, a chip) in the terminal device. In this application, a function performed by an access network device may also be performed by a module (for example, a chip) in the access network device. For example, a function performed by a first access network device in this application may also be performed by a module (for example, a chip) in the first access network device.

As shown in FIG. 4, the key management method may include the following steps.

**Step S401: A first access network device sends preconfiguration information of a plurality of candidate cells and first key information to a terminal device.**

Correspondingly, the terminal device receives the preconfiguration information of the plurality of candidate cells and the first key information from the first access network device.

Optionally, the preconfiguration information of the plurality of candidate cells is used by the terminal device to perform switching one or more times in the plurality of candidate cells. For example, preconfiguration information of a candidate cell may include physical channel configuration information, reference signal configuration information, and the like of the candidate cell.

Optionally, the preconfiguration information does not include the first key information. For example, the first key information may be a next hop chaining count (next hop chaining count, NCC).

Optionally, the preconfiguration information of the plurality of candidate cells may include preconfiguration information of a cell managed by the first access network device.

Optionally, the first key information is carried in one of layer 1 signaling, layer 2 signaling, and layer 3 signaling. For example, the L3 signaling may be an RRC message, the L2 signaling may be a media access control control element (Media Access Control Control Element, MAC CE), and the L1 signaling may be downlink control information (Downlink Control Information, DCI). Alternatively, the first key information is carried in a handover command, and the handover command indicates switching to a target cell. For example, in LTM, after determining the target cell to which the terminal device switches, the first access network device may send a handover command to the terminal device. The handover command indicates switching to the target cell, and the handover command may include the first key information.

It should be understood that a cell corresponding to preconfiguration information obtained by the first access network device may be referred to as a candidate cell. If the candidate cell is determined as a cell to which the terminal device switches, the candidate cell may be referred to as a target cell.

Optionally, the plurality of candidate cells belong to one or more access network devices, or the plurality of candidate cells are managed by one or more access network devices.

In an implementation, before performing step S401, the first access network device may obtain preconfiguration information of a candidate cell from one or more candidate access network devices, to obtain the preconfiguration information of the plurality of candidate cells. For example, for obtaining, by the first access network device, the preconfiguration information of the candidate cell, refer to step S502 and step S503 in the following embodiment.

For example, the candidate access network devices include a second access network device, and the first access network device may send a handover request message to the second access network device, where the handover request message is for requesting preconfiguration information of a cell managed by the second access network device, and the cell managed by the second access network device includes the target cell; and receive a response message sent by the second access network device, where the response message includes a preconfiguration message of the target cell. The handover request message does not include the first key information and a first key, and the response message does not include the first key information.

It should be understood that this embodiment of this application is applicable to a handover technology (for example, CHO) triggered by a terminal device and a handover technology (for example, LTM) triggered by an access network device. Optionally, specific content of the preconfiguration information may be related to a used handover technology. For example, the preconfiguration information may be L1/L2 triggered mobility (L1/L2 Triggered Mobility, LTM) preconfiguration information, or may be conditional handover (Conditional Handover, CHO) preconfiguration information. The used handover technology and the specific content of the preconfiguration information are not limited in this embodiment of this application.

**Step S402: The first access network device sends the first key to the second access network device to which the target cell to which the terminal device switches belongs, where the first key is a key for communication between the terminal device and the second access network device, and the plurality of candidate cells include the target cell.**

Correspondingly, the second access network device receives the first key from the first access network device. For example, in an NR communication system, the first key may be KgNB, and may be for further deriving Kup and Krrc.

In an implementation, the first access network device may send the first key to the second access network device after the target cell is determined. For example, the first access network device may send a notification message to the second access network device, where the notification message indicates that the terminal device is to perform access, and the notification message may carry the first key.

In another implementation, the first access network device may receive a first message sent by the terminal device, where the first message indicates switching to the target cell, and the target cell belongs to the second access network device. Further, the first access network device may send the first key to the second access network device. For example, the first access network device may send a notification message to the second access network device, where the notification message carries the first key.

Optionally, the notification message does not carry the first key information.

In still another implementation, the first access network device may receive a request message sent by the second access network device, where the request message is for requesting the key for communication between the terminal device and the second access network device; and send the first key to the second access network device in response to the request message.

Optionally, the request message further includes a message authentication code for integrity. The first access network device may send the first key to the second access network device after the request message is successfully verified based on the message authentication code for integrity.

For example, when determining that handover fails or a radio link fails, the terminal device may determine the target cell from the plurality of candidate cells, where the target cell belongs to the second access network device. Further, the terminal device may send a second message to the second access network device, where the second message is for requesting to access the target cell. The second access network device may send the second message to the first access network device to obtain the first key. Further, after accessing the target cell, the terminal device may communicate with the target cell based on the first key. Optionally, the second message further includes a message authentication code for integrity and/or an identifier of the terminal device.

**Step S403: The terminal device performs derivation based on the first key information, to obtain the first key corresponding to the target cell.**

In some embodiments, the terminal device may perform derivation based on the first key information and cell information (for example, downlink frequency information) of the target cell, to obtain the first key. Further, the terminal device may access the target cell, and communicate with the target cell based on the first key.

In some other embodiments of this application, when the terminal device fails to switch to the target cell or the radio link fails, the terminal device may determine a second cell from the plurality of candidate cells. Assuming that the second cell belongs to a third access network device, the terminal device may send a third message to the third access network device, where the third message is for requesting to access the second cell. The third access network device may send the third message to the first access network device to obtain a second key. The terminal device may derive the second key based on the first key information and cell information of the second cell. In this way, after accessing the second cell, the terminal device may communicate with the second cell based on the second key. Optionally, the third message further includes a message authentication code for integrity and/or an identifier of the terminal device.

It should be understood that, a method for performing key derivation by the access network device and the terminal device is not limited in this embodiment of this application. For example, refer to the following related descriptions.

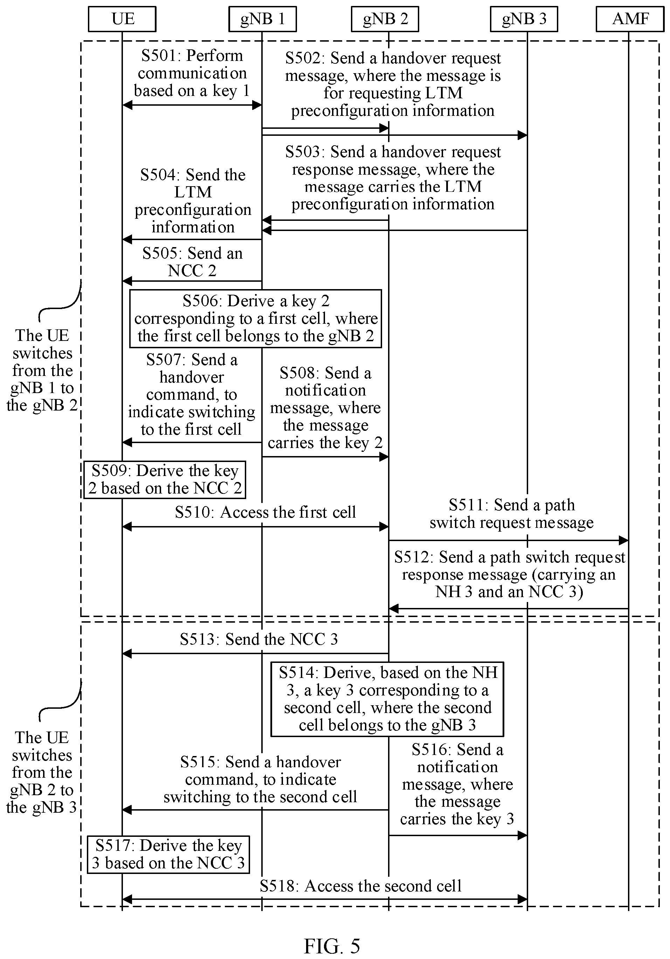

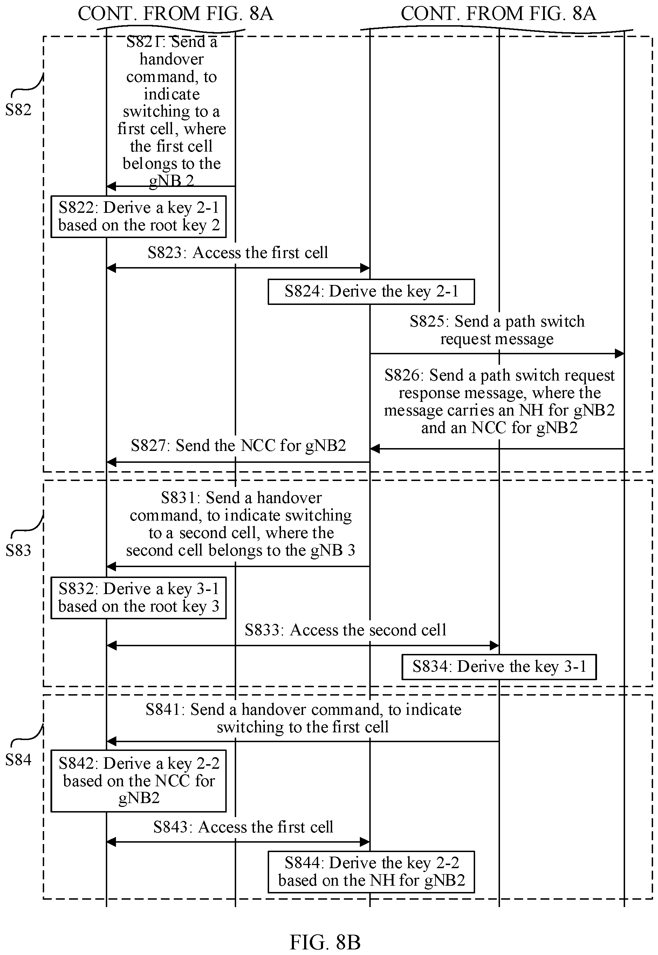

The method embodiment shown in FIG. 4 includes many possible implementation solutions. The following describes some of the implementation solutions by using examples with reference to FIG. 5 to FIG. 8A and FIG. 8B. It should be noted that, for related concepts, operations, or logical relationships that are not explained in FIG. 5 to FIG. 8A and FIG. 8B, refer to corresponding descriptions in the embodiment shown in FIG. 4.

The method embodiment shown in FIG. 4 is applicable to a handover technology triggered by an access network device. To be specific, the access network device sends a handover command to a terminal device, to trigger the access network device to perform switching. For example, in an LTM handover technology, a terminal device may first obtain LTM preconfiguration information of a plurality of candidate cells, then the terminal device measures and reports reference signals of the candidate cells, and an access network device delivers a handover command to indicate the terminal device to switch to a specific candidate cell. For a specific process, refer to the embodiment shown in FIG. 5.

FIG. 5 is a schematic flowchart of another key management method according to an embodiment of this application.

The key management method provided in this embodiment of this application is described in detail by using an example in which a terminal device is UE, a source access network device (namely, the foregoing first access network device) of the terminal device is a gNB 1, a target access network device (namely, the foregoing second access network device) to which the terminal device switches is a gNB 2, and a core network device is an AMF.

As shown in FIG. 5, the key management method may include a part or all of the following steps.

S501: The UE communicates with the gNB 1 based on a key 1.

For example, a serving cell (or referred to as a source cell) of the UE is a cell 1, and is managed by the gNB 1. Therefore, the gNB 1 may also be referred to as a serving gNB or a source gNB. The UE may use the key 1 to perform processing such as encryption and integrity protection on communication data and signaling. It should be understood that, when performing encryption processing on data and signaling, the UE may further use the key 1 as a parameter to generate a user plane processing key Kup and an RRC layer processing key Krrc.

S502: The gNB 1 sends a handover request message to a candidate gNB (for example, the gNB 2 and a gNB 3), where the message is for requesting LTM preconfiguration information.

In FIG. 5, an example in which the gNB 2 and the gNB 3 are candidate gNBs and the gNB 1 is the source gNB is used for description. As shown in FIG. 5, the gNB 1 may send a handover request message to the gNB 2 and the gNB 3 separately, and the message is for requesting to provide LTM preconfiguration information of a candidate cell.

It should be understood that, different from the method shown in FIG. 2, in this embodiment of this application, the message does not need to carry a key used by a candidate cell/a target cell to communicate with the UE, and does not need to carry a corresponding NCC.

In this embodiment of this application, when a candidate cell is determined as a cell to which the terminal device switches, the candidate cell may be referred to as a target cell, and a candidate gNB that manages the target cell may be referred to as a target gNB.

S503: The candidate gNB sends a handover request response message to the gNB 1, where the handover request response message carries the LTM preconfiguration information.

As shown in FIG. 5, the gNB 2 and the gNB 3 may separately send a handover request response message to the gNB 1. The message may carry LTM preconfiguration information of cells (that is, a plurality of candidate cells) managed by the gNBs.

For example, the message may carry LTM preconfiguration information of cells managed by the gNB 2 and the gNB 3. In other words, the plurality of candidate cells include the cells managed by the gNB 2 and the gNB 3.

Optionally, the message may further carry LTM preconfiguration information of a cell (that is, a plurality of candidate cells) managed by the gNB 1. In other words, the plurality of candidate cells include the cell managed by the gNB 1.

It should be understood that, different from FIG. 2, in this embodiment of this application, the handover request response message in step S503 in this embodiment of this application does not need to carry an NCC.

S504: The gNB 1 sends the LTM preconfiguration information to the UE.

For example, the gNB 1 may send the LTM preconfiguration information of the cells managed by the gNB 2 and the gNB 3 to the UE.

It should be understood that, different from FIG. 2, in this embodiment of this application, the preconfiguration information in step S504 in this embodiment of this application does not include an NCC corresponding to a candidate cell.

S505: The gNB 1 sends an NCC 2 to the UE.

The NCC 2 is key information used by the UE during current cell switching, and is used by the UE to derive a key for current handover of the UE.

It should be understood that, if a handover execution procedure is not started when the UE receives the NCC 2, the NCC 2 is used by the UE to derive a key for next switching of the UE; or when receiving the NCC 2, if the UE determines that a handover execution procedure is to be started, the NCC 2 is used by the UE to derive the key for the current handover of the UE.

Optionally, before determining the target cell of the current handover, the gNB 1 may send the NCC 2 to the UE.

In an implementation, the gNB 1 may send the NCC 2 to the UE by using L3/L2/L1 signaling, so that the UE derives the key for the target cell.

For example, the L3 signaling may be an RRC message, the L2 signaling may be a MAC CE, and the L1 signaling may be DCI. The NCC 2 may be received by the gNB 1 from the AMF, and this process is not shown in FIG. 5.

Optionally, after receiving the NCC 2, the UE may store a value of the NCC 2, and does not immediately use the NCC 2 to perform key derivation or replace a previously stored NCC. For example, before step S505, the UE stores an NCC 1, and after step S505, the UE may store values of both the NCC 1 and the NCC 2.

In a possible implementation, the NCC 2 sent in step S505 may be sent by using a handover command in step S507. In this case, it may be considered that step S505 and step S507 are combined into one step.

S506: The gNB 1 derives a key 2 corresponding to a first cell, where the first cell belongs to the gNB 2.

In some embodiments, the gNB 1 may derive the key 2 based on parameters such as a physical cell identifier (Physical Cell ID, PCI) and a downlink frequency of the target cell in combination with an NH 2 corresponding to the NCC 2 or in combination with the key 1. The NCC 2 and the NH 2 are key information obtained by the gNB 1 from a core network. A method for deriving a key by the gNB and the UE is not limited in this embodiment of this application.

For example, the gNB 1 may determine a derivation manner based on the NCC 2 and the NH 2. The derivation manner includes vertical derivation and horizontal derivation. Further, when determining that the derivation manner is vertical derivation, the gNB 1 may derive the key 2 based on the NH 2 and parameters such as a PCI and a downlink frequency of the first cell. When determining that the derivation manner is horizontal derivation, the gNB 1 may derive the key 2 based on the key 1 and parameters such as the PCI and the downlink frequency of the first cell.

When the gNB 1 has a pair of unused parameters {NH, NCC} (that is, a new NCC and a new NH are received), the gNB 1 may use vertical derivation. When the source gNB does not have a pair of unused parameters {NH, NCC} (that is, both a stored NH and NCC are used), the source gNB uses horizontal derivation. The pair of parameters {NH, NCC} may be provided by the AMF for the gNB 1. It should be understood that, that both the stored NH and NCC are used may be that the NH and the NCC are used during intra-station handover.

S507: The gNB 1 sends a handover command to the UE, where the handover command indicates switching to the first cell.

The first cell is a target cell of the current handover. The handover command may also be referred to as an LTM command (command, CMD), namely, an LTM CMD.

It should be noted that an LTM handover command is used as an example in FIG. 5, and the handover command may be an L1/L2 message. In another handover technology, the handover command may be an L1/L2/L3 message.

The handover command may include identification information corresponding to the target cell. For example, the identification information may be a preconfigured identifier, indicating which set of preconfigurations received in step S504 is used by the UE.

S508: The gNB 1 sends a notification message to the gNB 2, where the notification message carries the key 2.

The notification message includes key information (for example, the key 2) that needs to be used when the target cell (namely, the first cell) communicates with the UE, and does not need to include an NCC.

In addition, the notification message may further include one or more of the following: identity information of the UE, identity information of the target cell, and identity information of the target gNB.

It should be noted that a sequence of performing step S507 and step S508 is not limited in this embodiment of this application, and a sequence of performing step S507 and step S506 is not limited either.

S509: The UE derives the key 2 based on the NCC 2.

In some embodiments, the UE may determine a PCI and downlink frequency information of the target cell based on an identity of the target cell indicated in step S507, and further derive the key (for example, the key 2) of the target cell based on the NCC 2 received in step S505.

In an implementation, the UE may compare the newly received NCC (namely, the NCC 2) with an NCC value previously received and stored, and if the NCC values are the same, perform horizontal derivation; or if the NCC values are different, perform vertical derivation.

S510: The UE accesses the first cell.

In some embodiments, the UE may access the target cell based on the preconfiguration information of the target cell received in step S504.

S511: The gNB 2 sends a path switch request message to the AMF, to request the core network to switch a downlink path, for the UE, between a user plane function network element and a base station from the gNB 1 to the gNB 2.

S512: The AMF sends a path switch request response message (carrying an NH 3 and an NCC 3) to the gNB 2.

Optionally, the path switch request response message may further carry indication information indicating whether path switch succeeds.

The foregoing steps S501 to S512 are a specific process of a first time of handover (the UE switches from the gNB 1 to the gNB 2). The following further shows an example of some steps (for example, steps S513 to S518) of a second time of handover (the UE switches from the gNB 2 to the gNB 3). It should be understood that cell switching after the first time of handover may be referred to as subsequent switching, and the LTM preconfiguration information of the plurality of candidate cells received by the UE may be used for the subsequent switching of the UE after the first time of handover.

S513: The gNB 2 sends the NCC 3 to the UE.

The NCC 3 is key information used during the second time of handover, and is used by the UE to derive a key of a target cell during the second time of handover.

S514: The gNB 2 derives, based on the NH 3, the key 3 corresponding to the second cell, where the second cell belongs to the gNB 3.

S515: The gNB 2 sends a handover command to the UE, to indicate to switch to the second cell.

S516: The gNB 2 sends a notification message to the gNB 3, where the notification message carries the key 3.

S517: The UE derives the key 3 based on the NCC 3.

It should be understood that the keys, namely, the key 1, the key 2, and the key 3, may be KgNB in NR communication. The UE and a gNB further derive, by using KgNB, a key Kup used for user plane data and a key Krrc used for RRC layer signaling. The UE and the gNB perform security processing such as encryption and integrity protection on the user plane data by using Kup, and the UE and the gNB perform security processing such as encryption and integrity protection on RRC signaling by using Krrc.

S518: The UE accesses the second cell.

In the method shown in FIG. 5, during the second time of handover, the gNB 2 sends, to the UE, the NCC 3 used in the current handover, and the UE may derive the key 3 based on the NCC 3; and sends, to the gNB 3, the key 3 derived based on the NH 3 corresponding to the NCC 3, to ensure that the keys of the UE and the gNB 3 are aligned.

After step S518, the second time of handover may further include that the gNB 3 may obtain an NH 4 and an NCC 4 from the AMF, and send the NCC 4 to the UE. For details, refer to step S511 to step S513, which are not shown in FIG. 5.

It is assumed that a third time of handover is handover from the second cell of the gNB 3 to the first cell of the gNB 2. Key information used for the first time of handover to the first cell is the NCC 2, key information used for the third time of handover to the first cell is the NCC 4, and the UE uses the NCC 2 to derive a key during the first time of handover to the first cell, and uses the NCC 4 to derive a key during the third time of handover to the first cell, to obtain different keys. Therefore, although the first time of handover and the third time of handover are handover to a same cell, key reuse can still be avoided, thereby ensuring communication security.

In some embodiments of this application, before step S505, the UE stores the NCC 1, and the NCC 1 is an NCC corresponding to a key for a current serving cell of the UE. After step S505, the UE stores the values of both the NCC 1 and the NCC 2, and the NCC 2 is an NCC corresponding to a key for the target cell of LTM handover.

After step S505, if the source gNB triggers L3 handover (for example, the handover shown in FIG. 1A, or an intra-cell key change) once, and if a handover command of the current L3 handover or a key reconfiguration command indicates the NCC 3, the UE performs the current L3 handover or key update, updates the previously stored value of the NCC 1 to a value of the NCC 3 (if NCC 1=NCC 3, the update process may also be understood as retaining the value of the NCC 1), and updates the previously stored value of the NCC 2 to the value of the NCC 3 (if NCC 2=NCC 3, the update process may also be understood as retaining the value of the NCC 1).

According to the foregoing technology, it can be ensured that when the LTM handover and the L3 handover (or the intra-cell key change) coexist, subsequent key derivation results of the UE and the base station are consistent, thereby avoiding different keys derived by the UE and the base station, and avoiding a communication failure.

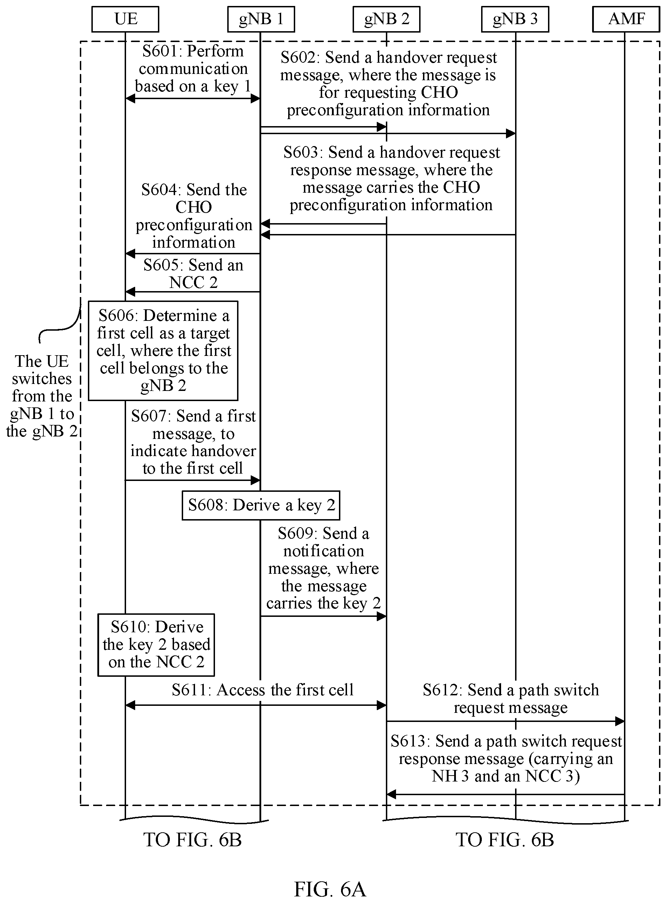

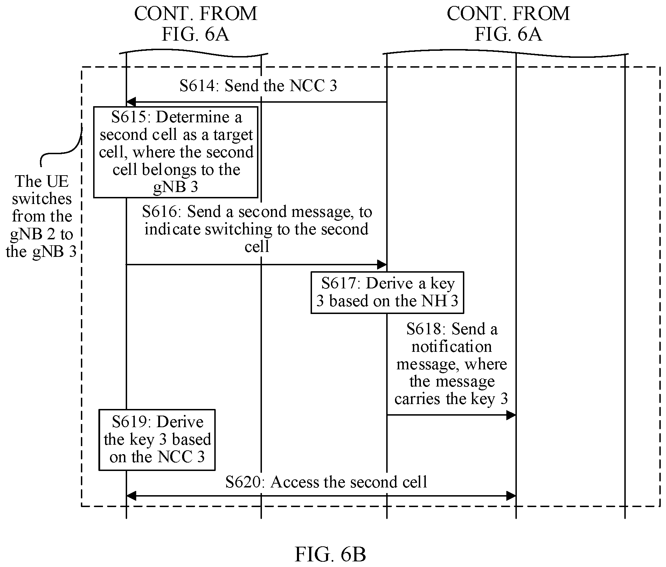

The method embodiment shown in FIG. 4 is further applicable to a handover technology (for example, a CHO handover technology) triggered by a terminal device. For example, in the CHO handover technology, an access network device may provide a terminal device with configurations of a plurality of candidate cells and a corresponding triggering condition. For example, the triggering condition may be that reference signal received power (Reference Signal Received Power, RSRP) of a reference signal in a specific candidate cell is higher than that of a reference signal in a serving cell by preset decibels (dB). Further, when determining that a triggering condition corresponding to a specific candidate cell is satisfied, the terminal device selects the cell as a target cell, and accesses the target cell. In the handover technology triggered by the terminal device, for example, the CHO, the access network device does not need to deliver a handover command, to indicate a target cell to the terminal device. For a specific process, refer to the embodiment shown in FIG. 6A and FIG. 6B.

FIG. 6A and FIG. 6B are a schematic flowchart of still another key management method according to an embodiment of this application.

The key management method provided in this embodiment of this application is described in detail by using an example in which a terminal device is UE, a source access network device (namely, the foregoing first access network device) of the terminal device is a gNB 1, a target access network device (namely, the foregoing second access network device) to which the terminal device switches is a gNB 2, and a core network device is an AMF.

As shown in FIG. 6A and FIG. 6B, the key management method may include a part or all of the following steps.

S601: The UE communicates with the gNB 1 based on a key 1.

S602: The gNB 1 sends a handover request message to a candidate gNB (for example, the gNB 2 and a gNB 3), where the message is for requesting CHO preconfiguration information.

S603: The candidate gNB sends a handover request response message to the gNB 1, where the message carries the CHO preconfiguration information.

For example, the message may carry LTM preconfiguration information of cells managed by the gNB 2 and the gNB 3. In other words, the plurality of candidate cells include the cells managed by the gNB 2 and the gNB 3.

Optionally, the message may further carry LTM preconfiguration information of a cell

(that is, a plurality of candidate cells) managed by the gNB 1. In other words, the plurality of candidate cells include the cell managed by the gNB 1.

S604: The gNB 1 sends the CHO preconfiguration information to the UE.

S605: The gNB 1 sends an NCC 2 to the UE.

S606: The UE determines a first cell as a target cell, where the first cell belongs to the gNB 2.

In some embodiments, when determining, through evaluation, that a candidate cell satisfies a handover triggering condition, the UE may select the candidate cell as the target cell. For example, the first cell managed by the gNB 2 is a candidate cell, and if the UE determines, through evaluation, that the first cell satisfies the handover triggering condition, the UE selects the first cell as the target cell.

S607: The UE sends a first message to the gNB 1, to indicate handover to the first cell.

The first message may include at least one of the following information: identification information corresponding to the target cell (namely, the first cell) selected by the UE, and identification information corresponding to a target gNB (namely, the gNB 2) selected by the UE.

In this embodiment of this application, the first message may also be referred to as a goodbye message (Goodbye message). A name of the first message is not limited in this application.

S608: The gNB 1 derives a key 2.

In some embodiments, the gNB 1 may perform key derivation based on the identification information corresponding to the target cell or the target gNB in the first message.

S609: The gNB 1 sends a notification message to the gNB 2, where the notification message carries the key 2.

In some embodiments, the gNB 1 determines, based on the identification information corresponding to the target cell (namely, the first cell) or the target gNB (namely, the gNB 2) indicated in the first message, that the target gNB is the gNB 2, and sends the notification message to the gNB 2. In this embodiment of this application, the first message may also be referred to as a CHO Notification (CHO Notification) notification. A name of the first message is not limited in this application.

Optionally, the notification message may indicate that a terminal device is to access a cell managed by the gNB 2.

S610: The UE derives the key 2 based on the NCC 2.

S611: The UE accesses the first cell.

S612: The gNB 1 sends a path switch request message to the AMF, to request a core network to switch a downlink path, for the UE, between a user plane function network element and a base station from the gNB 1 to the gNB 2.

S613: The AMF sends a path switch request response message to the gNB 1, where the message carries an NH 3 and an NCC 3.

Both the NH 3 and the NCC 3 are for deriving a key for communication between the terminal device and an access network device.

Optionally, the path switch request response message may further carry indication information indicating whether path switch succeeds.

The foregoing steps S601 to S612 are a specific process of a first time of handover (the UE switches from the gNB 1 to the gNB 2). The following further shows an example of some steps (for example, steps S613 to S618) of a second time of handover (the UE switches from the gNB 2 to the gNB 3). It should be understood that cell switching after the first time of handover may be referred to as subsequent switching, and the CHO preconfiguration information of the plurality of candidate cells received by the UE may be used for the subsequent switching of the UE after the first time of handover.

S614: The gNB 2 sends the NCC 3 to the UE.

S615: The UE determines a second cell as a target cell, where the second cell belongs to the gNB 3.

The gNB 2 derives a key 3 corresponding to the second cell, where the second cell belongs to the gNB 3.

S616: The UE sends a second message to the gNB 2, to indicate handover to the second cell.

S617: The gNB 1 derives the key 3 based on the NH 3.

S618: The gNB 1 sends a notification message to the gNB 3, where the notification message carries the key 3.

S619: The UE derives the key 3 based on the NCC 3.

It should be understood that the keys, namely, the key 1, the key 2, and the key 3, may be KgNB in NR communication. The UE and the gNB further derive, by using KgNB, a key Kup used for user plane data and a key Krrc used for RRC layer signaling. The UE and the gNB perform security processing such as encryption and integrity protection on the user plane data by using Kup, and the UE and the gNB perform security processing such as encryption and integrity protection on RRC signaling by using Krrc.

S620: The UE accesses the second cell.

For specific implementations of some steps (for example, for step S601, refer to step S501) in this embodiment of this application, refer to related content in FIG. 5. Details are not described herein again.

In the method shown in FIG. 6A and FIG. 6B, during the second time of handover, the gNB 2 sends, to the UE, the NCC 3 used in the current handover, and the UE may derive the key 3 based on the NCC 3; and sends, to the gNB 3, the key 3 derived based on the NH 3 corresponding to the NCC 3, to ensure that the keys of the UE and the gNB 3 are aligned.

After step S620, the second time of handover may further include that the gNB 3 may obtain an NH 4 and an NCC 4 from the AMF, and send the NCC 4 to the UE. For details, refer to step S612 to step S614, which are not shown in FIG. 6A and FIG. 6B.

It is assumed that a third time of handover is handover from the second cell of the gNB 3 to the first cell of the gNB 2. Key information used for the first time of handover to the first cell is the NCC 2, key information used for the third time of handover to the first cell is the NCC 4, and the UE uses the NCC 2 to derive a key during the first time of handover to the first cell, and uses the NCC 4 to derive a key during the third time of handover to the first cell, to obtain different keys. Therefore, although the first time of handover and the third time of handover are handover to a same cell, key reuse can still be avoided, thereby ensuring communication security.

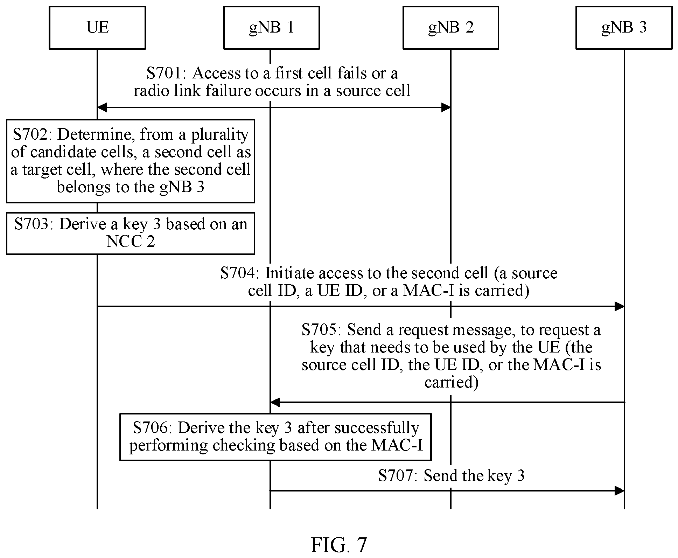

In the process of performing FIG. 5 and FIG. 6A and FIG. 6B, a handover failure may occur. For example, the UE fails to access the first cell or the second cell. An embodiment of this application provides still another key management method. The method may be performed after a handover failure, after communication of a source base station fails, or the like. For details, refer to FIG. 7.

FIG. 7 is a schematic flowchart of still another key management method according to an embodiment of this application. As shown in FIG. 7, the key management method may include a part or all of the following steps.

S701: UE fails to access a first cell or a radio link failure occurs in a source cell.

For example, the UE fails to perform switching. For example, in step S510 or S611, the UE cannot be successfully switched to the first cell managed by the gNB 2.

In a possible implementation, after receiving a handover command, the UE starts a timer; and after the timer expires, if the UE still fails to perform switching, the UE determines that the handover fails, and performs a cell selection operation, that is, step S702.

For another example, if the UE detects the radio link failure in the source cell, the UE may perform step S702.

S702: The UE determines, from a plurality of candidate cells, a second cell as a target cell, where the second cell belongs to a gNB 3.

In some embodiments, if a cell selected by the UE is a previously preconfigured candidate cell, the UE may access the cell in subsequent steps S703 and S704.

S703: The UE derives a key 3 based on an NCC 2.

In some embodiments, the UE may derive the key 3 based on the NCC 2 and cell information (for example, a PCI) of the second cell.

S704: The UE initiates access to the second cell, where at least one of the following information is carried: a source cell ID, a UE ID, and a MAC-I.

The source cell ID may be identification information corresponding to the source cell/a source gNB, the UE ID is identification information of the UE, and the MAC-I is a message authentication code for integrity (MAC-I, Message Authentication Code for integrity) generated by the UE by processing an uplink message by using a key of the source cell.

In some embodiments, the UE sends the uplink message to the second cell/the gNB 3, and the uplink message may carry the source cell ID. Optionally, the uplink message may further carry the UE ID and the MAC-I.

In a possible implementation, the MAC-I is a short version MAC-I, that is, a part of bits of the complete MAC-I are intercepted.

S705: The gNB 3 sends a request message to the gNB 1, to request a key that needs to be used by the UE, where the request message carries at least one of the following information: the source cell ID, the UE ID, and the MAC-I.

In some embodiments, the gNB 3 may determine, by using the identification information corresponding to the source cell/gNB in the message in step S704, to send the request message to the gNB 1.

Optionally, the request message may carry the MAC-I in step E, and the MAC-I is used by the gNB 1 to check whether the request is valid.

Optionally, the request message carries identity information of the UE, and is used by the gNB 1 to determine specific UE for which key derivation is performed.

S706: The gNB 1 derives the key 3.

Optionally, the gNB 1 derives the key 3 after successfully performing checking based on the MAC-I.

S707: The gNB 3 sends the key 3 to the gNB 1.

It should be understood that the keys, namely, the key 1, the key 2, and the key 3, may be KgNB in NR communication. The UE and the gNB further derive, by using KgNB, a key Kup used for user plane data and a key Krrc used for RRC layer signaling. The UE and the gNB perform security processing such as encryption and integrity protection on the user plane data by using Kup, and the UE and the gNB perform security processing such as encryption and integrity protection on RRC signaling by using Krrc.

In this embodiment of this application, the UE may perform cell selection when handover fails. If a selected cell is still a previously preconfigured candidate cell, the UE may send an uplink message to the cell/gNB when accessing the cell, to notify a specific source gNB from which key information needs to be obtained. The method can ensure that the UE can select a candidate cell for access after a handover failure, and still ensure key alignment between the UE and the selected cell/gNB, thereby improving robustness of the solution.

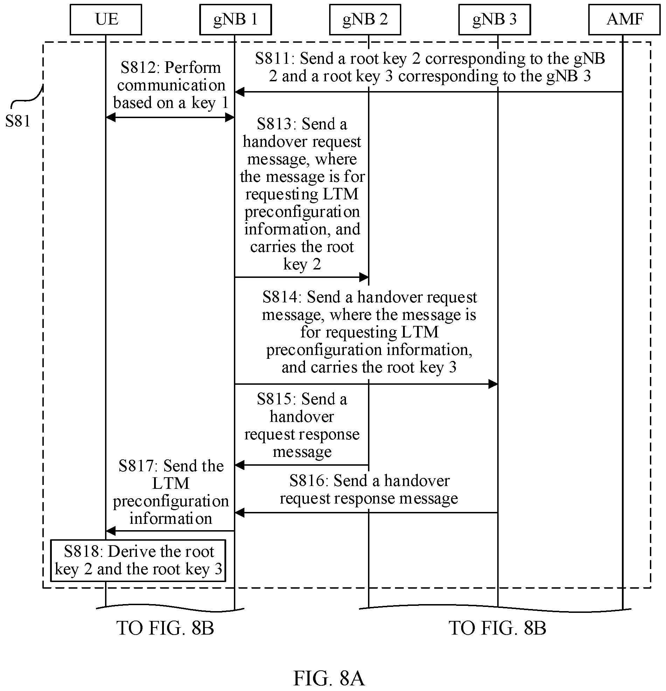

Refer to FIG. 8A and FIG. 8B. FIG. 8A and FIG. 8B are a schematic flowchart of yet another key management method according to an embodiment of this application.

The method is applicable to a handover technology (for example, CHO) triggered by a terminal device and a handover technology (for example, LTM) triggered by an access network device. In this embodiment of this application, a target access network device to which the terminal device switches may derive by itself a key that needs to be used, and a source access network device of the terminal device does not need to notify the target access network device of the key. The key management method provided in this embodiment of this application is described in detail by using an example in which a terminal device is UE, a source access network device (namely, the foregoing first access network device) of the terminal device is a gNB 1, a target access network device (namely, the foregoing second access network device) to which the terminal device switches is a gNB 2, and a core network device is an AMF.

As shown in FIG. 8A and FIG. 8B, LTM handover is used as an example. The key management method may include a part or all of the following steps.

**S81: The UE obtains an initial key of a candidate access network device.**

FIG. 8A and FIG. 8B are described by using an example in which the candidate access network device is the gNB 2 and a gNB 3.

In some embodiments, the AMF may provide initial keys to the gNB 2 and the gNB 3, which are respectively denoted as a root key 2 and a root key 3. For example, if a current serving gNB is the gNB 1, it may be considered that a used initial key is the root key 1.

In a possible implementation method, the AMF may provide a root key 2 and a root key 3 for the gNB 1, and the gNB 1 provides the root key 2 and the root key 3 for the gNB 2 and the gNB 3.

In another possible implementation method, the gNB 2 and the gNB 3 separately request initial keys from the AMF, and the AMF separately sends the initial keys to the gNB 2 and the gNB 3.

Optionally, the AMF may compute the root key 1 based on two parameters K_AMF and NAS UPLINK COUNTER that are maintained by the AMF, compute the root key 2 based on two parameters K_AMF and NAS UPLINK COUNTER+1, and compute the root key 3 based on two parameters K_AMF and NAS UPLINK COUNTER+2. K_AMF is a key corresponding to the AMF, and NAS UPLINK COUNTER is an uplink counter value of a non-access stratum (Non-Access Stratum, NAS).

It should be understood that the UE side also maintains the two parameters K_AMF and NAS UPLINK COUNTER, and may compute a root key 1, a root key 2, and a root key 3 according to the foregoing principle.

For example, as shown in FIG. 8A and FIG. 8B, S81 may include a part or all of the following steps:

S811: The AMF sends the root key 2 corresponding to the gNB 2 and the root key 3 corresponding to gNB 3.

S812: The UE communicates with the gNB 1 based on a key 1.

S813: The gNB 1 sends a handover request message to the gNB 2, where the handover request message is for requesting LTM preconfiguration information, and the handover request message carries the root key 2.

For specific descriptions of the LTM preconfiguration information, refer to the foregoing related content. Details are not described herein again.

S814: The gNB 1 sends a handover request message to the gNB 3, where the handover request message is for requesting LTM preconfiguration information, and the handover request message carries the root key 3.

S815: The gNB 2 sends a handover request response message to the gNB 1, where the handover request response message carries LTM preconfiguration information of a candidate cell managed by the gNB 2.

S816: The gNB 3 sends a handover request response message to the gNB 1, where the handover request response message carries LTM preconfiguration information of a candidate cell managed by the gNB 3.

S817: The gNB 1 sends the LTM preconfiguration information to the UE.

For example, the gNB 1 sends, to the UE, the LTM preconfiguration information of the candidate cell managed by the gNB 2 and the LTM preconfiguration information of the candidate cell managed by the gNB 3.

S818: The UE derives the root key 2 and the root key 3.

**S82: The UE switches to a first cell for the first time, where the first cell belongs to the gNB 2.**

In some embodiments, when the UE switches to a target cell/gNB (the gNB 2 in FIG. 8A and FIG. 8B) for the first time, the UE may generate a used key by using a root key corresponding to the target cell/gNB in combination with a PCI and the downlink frequency information of the target cell.

For example, as shown in FIG. 8A and FIG. 8B, S82 may include a part or all of the following steps:

S821: The gNB 1 sends a handover command to the UE, to indicate to switch to the first cell, where the first cell belongs to the gNB 2.

S822: The UE derives a key 2-1 based on the root key 2.

In this case, the UE switches to the gNB 2 for the first time, and the UE may generate the key 2-1 by using the root key 2 in combination with a PCI and frequency information of the first cell. It should be understood that meanings of 2-1 in the key 2-1 are: 2 indicates the gNB 2, and 1 indicates that the gNB 2 is accessed for the first time.

S823: The UE accesses the first cell.

S824: The gNB 2 derives the key 2-1.

In an implementation, the gNB 2 also generates the key 2-1 by using the root key 2 and the PCI and the frequency information of the first cell, the same as the foregoing UE.

S825: The gNB 2 sends a path switch request message to the AMF, to request a core network to switch a downlink path, for the UE, between a user plane function network element and a base station from the gNB 1 to the gNB 2.

S826: The AMF sends a path switch request response message to the gNB 2, where the message may carry an NH for gNB2 and an NCC for gNB2.

The NH is used by the gNB 2 to derive key 2-2 when the UE switches to the gNB 2 next time (namely, a second time of handover below). The NCC is used by the UE to derive a key 2-2 when the UE switches to the gNB 2 next time (namely, the second time of handover below).

Optionally, the path switch request response message may further carry indication information indicating whether path switch succeeds.

S827: The gNB 2 sends the NCC for gNB2 to the UE.

In an implementation, the gNB 2 may send the NCC corresponding to the gNB 2 to the UE by using L1/L2/L3 signaling. The signaling includes an NCC value, and optionally, further includes an identity (or a preconfigured identifier) corresponding to the gNB 2.

**S83: The UE switches to a second cell for the first time, where the second cell belongs to the gNB 3.**

In some embodiments, when the UE switches to the second cell or the gNB 3 for the first time, the UE may generate a used key by using a root key corresponding to the second cell/the gNB 3 in combination with a PCI and downlink frequency information of the second cell.

Similar to step S82, the UE and the gNB 3 separately derive a key 3-1. Meanings of 3-1 in the key 3-1 are: 3 identifies the gNB 3, and 1 indicates that the UE switches to the gNB 3 for the first time.

For example, as shown in FIG. 8A and FIG. 8B, S83 may include a part or all of the following steps:

S831: The gNB 2 sends a handover command to the UE, to indicate to switch to the second cell, where the second cell belongs to the gNB 3.

S832: The UE derives the key 3-1 based on the root key 3.

S833: The UE accesses the second cell.

S834: The gNB 3 derives the key 3-1.

It should be noted that, after step S834, the gNB 3 may obtain, from the AMF, an NH and an NCC corresponding to the gNB 3, and send the NCC corresponding to the gNB 3 to the UE. For details, refer to steps S825, S826, and S827, which are not shown in FIG. 8A and FIG. 8B.

**S84: The UE switches to the second cell for the second time.**

In some embodiments, when the UE switches to the first cell/the gNB 2 for the second time, a key 2-2 may be computed and derived based on the NCC for gNB2, and the PCI and the downlink frequency information of the second cell. Meanings of 2-2 are: The 1^{st} 2 represents the gNB 2, and the 2^{nd} 2 represents the second time of handover to the gNB 2. The gNB 2 may compute and derive the key 2-2 based on the NH for gNB2, and the PCI and the downlink frequency information of the first cell.

For example, as shown in FIG. 8A and FIG. 8B, S84 may include a part or all of the following steps:
S841: The gNB 3 sends a handover command to the UE, to indicate to switch to the first cell.

The handover command may include an identifier of the first cell.

S842: The UE derives the key 2-2 based on the NCC for gNB2.

In some embodiments, the UE performs key derivation based on parameters such as the NCC for gNB2, and the PCI and the downlink frequency of the first cell, to obtain the key 2-2.

S843: The UE accesses the first cell.

S844: The gNB 2 derives the key 2-2 based on the NH for gNB2.

It should be noted that, after step S834, the gNB 3 may obtain, from the AMF, an NH and an NCC corresponding to the gNB 3, and send the NH and the NCC corresponding to the gNB 3 to the UE. For details, refer to steps S825, S826, and S827, which are not shown in FIG. 8A and FIG. 8B.

In some embodiments, when detecting that the UE accesses the first cell, the gNB 2 may perform key derivation based on the NH for gNB2, to obtain the key 2-2; and communicate with the UE based on the key 2-2.

It should be understood that the keys, namely, the key 1, the key 2, and the key 3, may be KgNB in NR communication. The UE and the gNB further derive, by using KgNB, a key Kup used for user plane data and a key Krrc used for RRC layer signaling. The UE and the gNB perform security processing such as encryption and integrity protection on the user plane data by using Kup, and the UE and the gNB perform security processing such as encryption and integrity protection on RRC signaling by using Krrc.

It should be understood that FIG. 8A and FIG. 8B are described by using the LTM handover as an example. For a method procedure of CHO handover, refer to the foregoing method procedure in FIG. 8A and FIG. 8B. During the CHO handover, handover determining in the foregoing procedure in FIG. 8A and FIG. 8B needs to be changed to determining by the UE, that is, the foregoing steps S821, S831, and S841 are changed to determining the first cell by the UE.

The foregoing content describes in detail the method provided in this application. To facilitate implementation of the foregoing solutions in embodiments of this application, embodiments of this application further provide a corresponding apparatus or device.

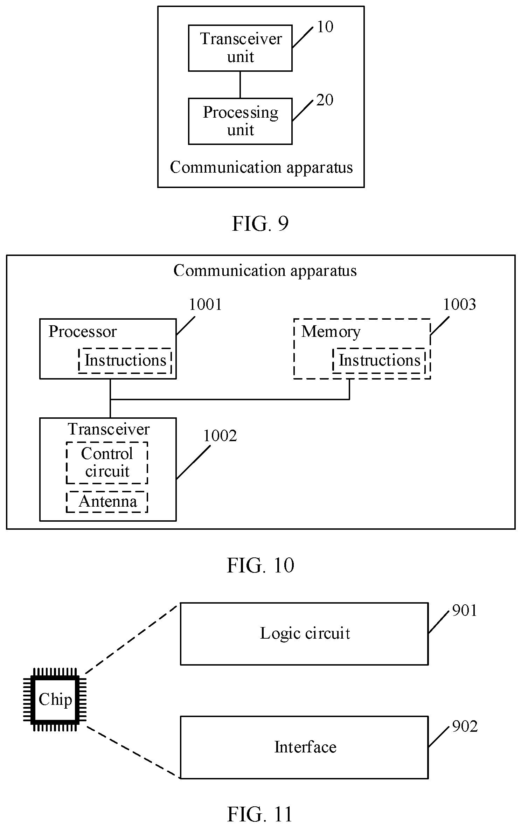

In this application, the first access network device and the terminal device are divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 9 to FIG. 11.

Refer to FIG. 9. FIG. 9 is a diagram of a structure of a communication apparatus according to an embodiment of this application. As shown in FIG. 9, the communication apparatus may include a transceiver unit 10 and a processing unit 20.

In some embodiments of this application, the communication apparatus may be the first access network device shown above, or a chip or a circuit disposed in the first access network device. In other words, the communication apparatus may be configured to perform steps, functions, or the like performed by the first access network device in the foregoing method embodiments.

In a design, the transceiver unit 10 is configured to: send preconfiguration information of a plurality of candidate cells and first key information to a terminal device, where the first key information is for deriving a key for communication between the terminal device and an access network device; and sending a first key to a second access network device to which a target cell to which the terminal device switches belongs, where the first key is a key for communication between the terminal device and the second access network device, and the plurality of candidate cells include the target cell.

For example, the preconfiguration information of the plurality of candidate cells is used by the terminal device to perform switching one or more times in the plurality of candidate cells.

For example, the preconfiguration information does not include the first key information.

For example, a plurality of candidate cells belong to one or more access network devices.

In a possible implementation, the transceiver unit 10 is specifically configured to: send the first key to the second access network device after the target cell is determined.

For example, the first key information is carried in one of layer 1 signaling, layer 2 signaling, and layer 3 signaling, or the first key information is carried in a handover command, and the handover command indicates switching to the target cell.

In a possible implementation, before sending the first key to the second access network device to which the target cell to which the terminal device switches belongs, the transceiver unit 10 is further configured to: receive a first message sent by the terminal device, where the first message indicates switching to the target cell.

In a possible implementation, the transceiver unit 10 is specifically configured to: receive a request message sent by the second access network device, where the request message is for requesting a key for communication between the terminal device and the second access network device; and
send the first key to the second access network device in response to the request message.

In a possible implementation, the transceiver unit 10 is specifically configured to send the first key to the second access network device after the request message is successfully verified based on the message authentication code for integrity.

In a possible implementation, the transceiver unit 10 is further configured to: send a handover request message to the second access network device, where the handover request message is for requesting preconfiguration information of a cell corresponding to the second access network device; and
receive a response message sent by the second access network device, where the response message includes a preconfiguration message of the target cell.

In this embodiment of this application, for descriptions of the first key, the preconfiguration information, the first key information, and the like, refer to the descriptions in the method embodiments shown in FIG. 4 to FIG. 7. Details are not described herein again.

It may be understood that the specific descriptions of the transceiver unit and the processing unit in embodiments of this application are merely examples. For specific functions, steps, or the like performed by the transceiver unit and the processing unit, refer to the method embodiments shown in FIG. 4 to FIG. 7. Details are not described herein again. In addition, for technical effects of this embodiment of this application, refer to the technical effects in the method embodiments shown in FIG. 4 to FIG. 7. For brevity, details are not described herein again.

FIG. 9 is reused. In some other embodiments of this application, the communication apparatus may be the terminal device shown above or a chip or a circuit disposed in the terminal device. In other words, the communication apparatus may be configured to perform steps, functions, or the like performed by the terminal device in the foregoing method embodiments.

In a design, the transceiver unit 10 is configured to receive preconfiguration information of a plurality of candidate cells and first key information, where the first key information is for deriving a key for communication between a terminal device and an access network device.

The processing unit 20 is configured to: after receiving a handover command, perform derivation based on the first key information, to obtain a first key corresponding to a first cell, where the handover command indicates switching to the first cell, the first cell belongs to a second access network device, and the first key is a key for communication between the terminal device and the second access network device.

For example, the preconfiguration information of the plurality of candidate cells is used by the terminal device to perform switching one or more times in the plurality of candidate cells.

For example, the preconfiguration information does not include the first key information.

For example, the first key information is carried in one of layer 1 signaling, layer 2 signaling, and layer 3 signaling, or the first key information is carried in a handover command.

For example, a plurality of candidate cells belong to one or more access network devices.

In a possible implementation, the processing unit 20 is further configured to: when determining that handover to the first cell fails or a radio link fails, determine a second cell from the plurality of candidate cells, where the second cell belongs to a third access network device. The transceiver unit 10 is further configured to send a second message to the third access network device, where the second message is for requesting to access the second cell.

For example, the second message further includes a message authentication code for integrity and/or an identifier of the terminal device.

It may be understood that the specific descriptions of the transceiver unit and the processing unit in embodiments of this application are merely examples. For specific functions, steps, or the like performed by the transceiver unit and the processing unit, refer to the method embodiments shown in FIG. 4, FIG. 5, and FIG. 7. Details are not described herein again. In addition, for technical effects of this embodiment of this application, refer to the technical effects in the method embodiments shown in FIG. 4, FIG. 5, and FIG. 7. For brevity, details are not described herein again.

FIG. 9 is reused. In some other embodiments of this application, the communication apparatus may be the terminal device shown above or a chip or a circuit disposed in the terminal device. In other words, the communication apparatus may be configured to perform steps, functions, or the like performed by the terminal device in the foregoing method embodiments.

In a design, the transceiver unit 10 is configured to: receive preconfiguration information of a plurality of candidate cells and first key information; and send a first message to a first access network device, where the first message indicates switching to a first cell, the first cell belongs to a second access network device, and the plurality of candidate cells include the first cell.

The processing unit 20 is configured to perform derivation based on the first key information, to obtain a first key corresponding to the first cell, where the first key is a key for communication between a terminal device and the second access network device.

The transceiver unit 10 is configured to: receive second key information from a second access network device; and send a second message to the second access network device, where the second message indicates switching to a second cell, the second cell belongs to a third access network device, and the plurality of candidate cells include the second cell.

The processing unit 20 is configured to perform derivation based on the second key information, to obtain a second key corresponding to the second cell, where the second key is a key for communication between the terminal device and the third access network device.

In a possible implementation, the processing unit 20 is further configured to determine the first cell and/or the second cell from the plurality of candidate cells based on the preconfiguration information of the plurality of candidate cells.

For example, a plurality of candidate cells belong to one or more access network devices.

For example, the first key information and/or the second key information are/is carried in one of layer 1 signaling, layer 2 signaling, and layer 3 signaling.

In a possible implementation, the processing unit 20 is further configured to: when determining that handover to the second cell fails or a radio link fails, determine a third cell from the plurality of candidate cells, where the third cell belongs to a fourth access network device. The transceiver unit 10 is further configured to send a third message to the fourth access network device, where the third message is for requesting to access the third cell.

For example, the third message further includes a message authentication code for integrity and/or an identifier of the terminal device.

It may be understood that the specific descriptions of the transceiver unit and the processing unit in embodiments of this application are merely examples. For specific functions, steps, or the like performed by the transceiver unit and the processing unit, refer to the method embodiments shown in FIG. 4, FIG. 6A and FIG. 6B, and FIG. 7. Details are not described herein again. In addition, for technical effects of this embodiment of this application, refer to the technical effects in the method embodiments shown in FIG. 4, FIG. 6A and FIG. 6B, and FIG. 7. For brevity, details are not described herein again.

The foregoing describes the first access network device and the terminal device in embodiments of this application. The following describes possible product forms of the first access network device and the terminal device. It should be understood that any form of product that has a function of the first access network device or the terminal device described in FIG. 9 falls within the protection scope of embodiments of this application. It should be further understood that the following description is merely an example, and does not limit a product form of the communication apparatus in embodiments of this application.

In a possible implementation, in the communication apparatus shown in FIG. 9, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the foregoing information, other processing may need to be performed on the foregoing information before the information is input into the processor.

Refer to FIG. 10. FIG. 10 is another diagram of a structure of a communication apparatus according to an embodiment of this application. As shown in FIG. 10, the communication apparatus provided in this embodiment of this application may be configured to implement the method described in the foregoing method embodiments. For details, refer to the descriptions in the foregoing method embodiments. The communication apparatus may be a first access network device, a terminal device, or a chip thereof. For example, the communication apparatus includes one or more processors 1001 and a transceiver 1002. The communication apparatus may further include a memory 1003. In an implementation, the communication apparatus further includes an input/output apparatus (not shown in FIG. 10).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the steps, the methods, or the functions performed by the first access network device in the embodiment shown in FIG. 4, the transceiver 1002 may be configured to perform step S401 and step S402 in FIG. 4, and/or another process of the technology described in this specification.

For example, when the communication apparatus is configured to perform the steps, the methods, or the functions performed by the terminal device in the embodiment shown in FIG. 4, the processor 1001 may be configured to generate step S403 in FIG. 4, and/or configured to perform another process of the technology described in this specification; and the transceiver 1002 may be configured to perform step S401 in FIG. 4, and/or configured to perform another process of the technology described in this specification.

For example, when the communication apparatus is configured to perform the steps, the methods, or the functions performed by the first access network device in the embodiment shown in FIG. 8A and FIG. 8B, the processor 1001 may be configured to perform step S824 in FIG. 8A and FIG. 8B, and/or configured to perform another process of the technology described in this specification; and the transceiver 1002 may be configured to perform step S827 in FIG. 8A and FIG. 8B, and/or configured to perform another process of the technology described in this specification.

For example, when the communication apparatus is configured to perform the steps, the methods, or the functions performed by the terminal device in the embodiment shown in FIG. 8A and FIG. 8B, the processor 1001 may be configured to perform steps S818 and S822 in FIG. 8A and FIG. 8B, and/or configured to perform another process of the technology described in this specification; and the transceiver 1002 may be configured to perform step S812, step S817, step S821, step S823, and step S827 in FIG. 8A and FIG. 8B, and/or configured to perform another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions, and the instructions may be a computer program. The computer program is run on the processor 1001, to enable the communication apparatus to perform the method described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may alternatively include more components than those in FIG. 10, or the like. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 9, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface.

Refer to FIG. 11. FIG. 11 is still another diagram of a structure of a communication apparatus according to an embodiment of this application. As shown in FIG. 11, the communication apparatus shown in FIG. 11 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 11 is shown by using an example in which the communication apparatus is a chip. The chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform the steps, the methods, or the functions performed by the first access network device in the method embodiment shown in FIG. 4, the logic circuit 901 is configured to determine a first key; the interface 902 is configured to send preconfiguration information of a plurality of candidate cells and first key information; and the interface 902 is configured to send the first key, where the first key is a key for communication between a terminal device and a second access network device.

For example, when the communication apparatus is configured to perform the steps, the methods, or the functions performed by the terminal device in the method embodiment shown in FIG. 4, the logic circuit 901 is configured to determine to perform derivation based on first key information, to obtain a first key corresponding to a target cell; and the interface 902 is configured to receive the first key.

In this embodiment of this application, for descriptions of the first key, the preconfiguration information, the first key information, and the like, refer to the descriptions in the method embodiment shown in FIG. 4. Details are not described herein again. It may be understood that for specific descriptions of the logic circuit 901 and the interface 902, refer to the descriptions of the processing unit and the transceiver unit shown in FIG. 9. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 11, further refer to the foregoing embodiments. Details are not described herein again.

An embodiment of this application further provides a communication system. The communication system includes a first access network device and a terminal device. The first access network device and the terminal device may be configured to perform the method in any one of the foregoing method embodiments (FIG. 4 to FIG. 8A and FIG. 8B).

In addition, this application further provides a computer program. The computer program is used to implement the operations and/or processing performed by the first access network device in the methods provided in this application.

This application further provides a computer program. The computer program is used to implement the operations and/or processing performed by the terminal device in the methods provided in this application.

This application further provides a computer-readable storage medium. The computer-readable storage medium stores computer code. When the computer code is run on a computer, the computer is enabled to perform the operations and/or processing performed by the first access network device in the methods provided in this application.

This application further provides a computer-readable storage medium. The computer-readable storage medium stores computer code. When the computer code is run on a computer, the computer is enabled to perform the operations and/or processing performed by the terminal device in the methods provided in this application.

This application further provides a computer program product. The computer program product includes computer code or a computer program. When the computer code or computer program is run on a computer, the operations and/or processing performed by the first access network device in the methods provided in this application is performed.

This application further provides a computer program product. The computer program product includes computer code or a computer program. When the computer code or the computer program is run on a computer, the operations and/or processing performed by the terminal device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A key management method, wherein the method comprises:
sending preconfiguration information of a plurality of candidate cells and first key information to a terminal device, wherein the first key information is for deriving a key for communication between the terminal device and an access network device; and
sending a first key to a second access network device to which a target cell to which the terminal device switches belongs, wherein the first key is a key for communication between the terminal device and the second access network device, and the plurality of candidate cells comprise the target cell.

2. The method according to claim 1, wherein the preconfiguration information of the plurality of candidate cells is used by the terminal device to perform switching one or more times in the plurality of candidate cells.

3. The method according to claim 1 or 2, wherein the preconfiguration information does not comprise the first key information.

4. The method according to any one of claims 1 to 3, wherein the plurality of candidate cells belong to one or more access network devices.

5. The method according to any one of claims 1 to 4, wherein sending the first key to the second access network device to which the target cell to which the terminal device switches belongs comprises:
sending the first key to the second access network device after the target cell is determined.

6. The method according to any one of claims 1 to 5, wherein the first key information is carried in one of layer 1 signaling, layer 2 signaling, and layer 3 signaling, or the first key information is carried in a handover command, and the handover command indicates switching to the target cell.

7. The method according to any one of claims 1 to 4, wherein before sending the first key to the second access network device to which the target cell to which the terminal device switches belongs, the method further comprises:
receiving a first message sent by the terminal device, wherein the first message indicates switching to the target cell.

8. The method according to any one of claims 1 to 4, wherein sending the first key to the second access network device to which the target cell to which the terminal device switches belongs comprises:
receiving a request message sent by the second access network device, wherein the request message is for requesting a key for communication between the terminal device and the second access network device; and
sending the first key to the second access network device in response to the request message.

9. The method according to claim 8, wherein the request message further comprises a message authentication code for integrity, and sending the first key to the second access network device comprises:
sending the first key to the second access network device after the request message is successfully verified based on the message authentication code for integrity.

10. The method according to any one of claims 1 to 9, wherein the method further comprises:
sending a handover request message to the second access network device, wherein the handover request message is for requesting preconfiguration information of a cell corresponding to the second access network device; and
receiving a response message sent by the second access network device, wherein the response message comprises a preconfiguration message of the target cell.

11. A key management method, wherein the method comprises:
receiving preconfiguration information of a plurality of candidate cells and first key information, wherein the first key information is for deriving a key for communication between a terminal device and an access network device; and
after receiving a handover command, performing derivation based on the first key information, to obtain a first key corresponding to a first cell, wherein the handover command indicates switching to the first cell, the first cell belongs to a second access network device, and the first key is a key for communication between the terminal device and the second access network device.

12. The method according to claim 11, wherein the preconfiguration information of the plurality of candidate cells is used by the terminal device to perform switching one or more times in the plurality of candidate cells.

13. The method according to claim 11 or 12, wherein the preconfiguration information does not comprise the first key information.

14. The method according to any one of claims 11 to 13, wherein the first key information is carried in one of layer 1 signaling, layer 2 signaling, and layer 3 signaling, or the first key information is carried in the handover command.

15. The method according to any one of claims 11 to 14, wherein the plurality of candidate cells belong to one or more access network devices.

16. The method according to any one of claims 11 to 15, wherein the method further comprises:
when determining that handover to the first cell fails or a radio link fails, determining a second cell from the plurality of candidate cells, wherein the second cell belongs to a third access network device; and
sending a second message to the third access network device, wherein the second message is for requesting to access the second cell.

17. The method according to claim 16, wherein the second message further comprises a message authentication code for integrity and/or an identifier of the terminal device.

18. A key management method, wherein the method comprises:
receiving preconfiguration information of a plurality of candidate cells and first key information;
sending a first message to a first access network device, wherein the first message indicates switching to a first cell, the first cell belongs to a second access network device, and the plurality of candidate cells comprise the first cell;
performing derivation based on the first key information, to obtain a first key corresponding to the first cell, wherein the first key is a key for communication between a terminal device and the second access network device;
receiving second key information from the second access network device;
sending a second message to the second access network device, wherein the second message indicates switching to a second cell, the second cell belongs to a third access network device, and the plurality of candidate cells comprise the second cell; and
performing derivation based on the second key information, to obtain a second key corresponding to the second cell, wherein the second key is a key for communication between the terminal device and the third access network device.

19. The method according to claim 18, wherein the method further comprises:
determining the first cell and/or the second cell from the plurality of candidate cells based on the preconfiguration information of the plurality of candidate cells.

20. The method according to claim 18 or 19, wherein the plurality of candidate cells belong to one or more access network devices.

21. The method according to any one of claims 18 to 20, wherein the first key information and/or the second key information is carried in one of layer 1 signaling, layer 2 signaling, and layer 3 signaling.

22. The method according to any one of claims 18 to 21, wherein the method further comprises:
when determining that handover to the second cell fails or a radio link fails, determining a third cell from the plurality of candidate cells, wherein the third cell belongs to a fourth access network device; and
sending a third message to the fourth access network device, wherein the third message is for requesting to access the third cell.

23. The method according to claim 22, wherein the third message further comprises a message authentication code for integrity and/or an identifier of the terminal device.

24. A communication apparatus, comprising a module or a unit configured to perform the method according to any one of claims 1 to 23.

25. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 23 by using a logic circuit or by executing code instructions.

26. A readable storage medium, configured to store a program, wherein the program is executed by one or more processors, to enable an apparatus comprising the one or more processors to perform the method according to any one of claims 1 to 23.

27. A communication system, comprising a first access network device configured to perform the method according to any one of claims 1 to 10, and the terminal device configured to perform the method according to any one of claims 11 to 23.
